# EUROPEAN PATENT SPECIFICATION

(11) **EP 3 567 775 B1**
(45) Date of publication and mention of the grant of the patent: **12.03.2025**
(21) Application number: 18747922.5
(22) Date of filing: 26.01.2018
(51) Int. Cl.: H04L 1/18, H04L 1/00

(54) **METHOD AND DEVICE FOR DATA TRANSMISSION WITH CONTROL INFORMATION INDICATING A MODULATION SCHEME, TRANSPORT BLOCK SIZE AND A RELATIONSHIP OF RETRANSMITTED DATA**
VERFAHREN UND VORRICHTUNG ZUR DATENÜBERTRAGUNG MIT STEUERINFORMATIONEN ZUR ANZEIGE EINES MODULATIONSSCHEMAS, EINER TRANSPORTBLOCKGRÖSSE UND EINER BEZIEHUNG WIEDERHOLTER DATEN
PROCEDE ET DISPOSITIF DE TRANSMISSION DE DONNEES AVEC INFORMATIONS DE CONTROLE INDIQUANT UN SCHEMA DE MODULATION, UNE TAILLE DE BLOC DE TRANSPORT ET UNE RELATION DE DONNEES TRANSMISES PAR RETRANSMISSION

(30) Priority: 03.02.2017 CN 201710063731; 24.03.2017 CN 201710184943
(43) Date of publication of application: 13.11.2019
(73) Proprietor: Huawei Technologies Co., Ltd., Longgang District Shenzhen, Guangdong 518129 (CN)
(72) Inventor: PENG, Jinlin, Shenzhen Guangdong 518129 (CN); DONG, Pengpeng, Shenzhen Guangdong 518129 (CN); ZHANG, Peng, Shenzhen Guangdong 518129 (CN); DU, Bai, Shenzhen Guangdong 518129 (CN)
(74) Representative: Goddar, Heinz J.
(86) International application number: PCT/CN2018/074221
(87) International publication number: WO 2018/141229

(56) References cited:
- CN-A- 102 291 209
- CN-A- 102 362 459
- CN-A- 103 973 403
- US-A1- 2013 128 849
- US-A1- 2016 233 999
- US-A1- 2016 323 084
- HUAWEI ET AL: "DCI design for short TTI", vol. RAN WG1, no. Nanjing, China; 20160523 - 20160527, 14 May 2016 (2016-05-14), XP051096624, Retrieved from the Internet <URL:http://www.3gpp.org/ftp/tsg_ran/WG1_RL1/TSGR1_85/Docs/> [retrieved on 20160514]
- HUAWEI HISILICON: "Discussion on sTTI scheduling schemes", vol. RAN WG1, no. Reno, USA; 20161114 - 20161118, 13 November 2016 (2016-11-13), XP051176954, Retrieved from the Internet <URL:http://www.3gpp.org/ftp/Meetings_3GPP_SYNC/RAN1/Docs/> [retrieved on 20161113]
- INTEL CORPORATION: "On the DCI design for multi-subframe scheduling", vol. RAN WG1, no. Nanjing, China; 20160523 - 20160527, 14 May 2016 (2016-05-14), XP051090089, Retrieved from the Internet <URL:http://www.3gpp.org/ftp/tsg_ran/WG1_RL1/TSGR1_85/Docs/> [retrieved on 20160514]
- SAMSUNG: "Discussion on partial retransmission for eMBB", vol. RAN WG1, no. Spokane, USA; 20170116 - 20170120, 16 January 2017 (2017-01-16), XP051208475, Retrieved from the Internet <URL:http://www.3gpp.org/ftp/Meetings_3GPP_SYNC/RAN1/Docs/> [retrieved on 20170116]

## Description

### TECHNICAL FIELD

Embodiments of this application relate to the communications field, and in particular, to a data transmission method and an apparatus in a wireless communications system.

### BACKGROUND

In third-generation and fourth-generation mobile communications systems, the hybrid automatic repeat request (hybrid automatic repeat request, HARQ) technology is introduced to implement reliable data transmission and improve data transmission efficiency. HARQ is a technology in which forward error correction (forward error correction, FEC) coding and automatic repeat request (automatic repeat request, ARQ) are combined, and a receiving device can correct a part of erroneous data by using the FEC technology, and requests retransmission from a sending device for an erroneous data packet that cannot be corrected.

For an enhanced mobile broadband (enhanced mobile broadband, eMBB) service in a fifth-generation (the fifth generation, 5G) wireless communications system, because a transport block (transport block, TB) is usually relatively large, a sending device needs to divide the TB into a plurality of code blocks (code block, CB), encodes each CB, and then sends the encoded CB to a receiving device. The receiving device decodes each received CB, and when a CB encounters a decoding error, sends a negative acknowledgement (negative acknowledgement, NACK) to the sending device, to request the sending device to retransmit data in the TB. The receiving device may indicate which CBs have encountered a decoding error or which CB groups have encountered a decoding error to the sending device, so that the sending device retransmits only the CBs that encounters a decoding error or the CB groups that encounters a decoding error, thereby improving retransmission efficiency. Herein, one CB group usually includes at least two CBs, without excluding that one CB group includes only one CB. For example, seven CBs are grouped into four CB groups, where the first three CB groups each include two CBs, and the last CB group includes only one CB. This application provides a solution to how a low-complexity data transmission method is designed.

US 2016/323084 A1 discloses a communication apparatus that has a receiver and a transmitter. The receiver, in operation receives a control signal including a Modulation and Coding Scheme (MCS) Index, a channel quality indicator (CQI) trigger and information indicating uplink resource blocks. The transmitter in operation, determines whether to multiplex an aperiodic CQI report with data in an uplink signal based on the MCS Index, the channel quality indicator trigger, the information indicating uplink resource blocks, and a threshold number of resource blocks, and transmits the uplink signal.

HUAWEI ET AL, "DCI design for short TTI", vol. RAN WG1, no. Nanjing, China; 20160523 - 20160527, (20160514), 3GPP DRAFT; R1-164060, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG1_RL1/TSGR1_85/Docs/, (20160514), discloses a DCI design for short TTI.

HUAWEI HISILICON, "Discussion on sTTI scheduling schemes", vol. RAN WG1, no. Reno, USA; 20161114 - 20161118, (20161113), 3GPP DRAFT; R1-1613028, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, (20161113), discloses a sTTI scheduling schemes.

INTEL CORPORATION, "On the DCI design for multi-subframe scheduling", vol. RAN WG1, no. Nanjing, China; 20160523 - 20160527, (20160514), 3GPP DRAFT; R1-164127, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG1_RL1/TSGR1_85/Docs/, (20160514), discloses the eLAA DCI design aspects that are related to FFS discussion points.

Patent application US 2013/128849 A1 (WENGERTER CHRISTIAN [DE] ET AL) 23 May 2013 (2013-05-23) discloses to combine a transport format transport block size/payload size/modulation and coding scheme, the redundancy version/constellation version and additionally HARQ related information (sequence number or new data indicator) within a single field of the control channel information. It is further disclosed if a retransmission needs to be sent for the user data, the control channel signal for this retransmission does not need to explicitly signal the transport format for the retransmitted protocol data unit, but rather the bits of the control information field indicate the redundancy version of the protocol data unit, while assuming the transport format of the retransmission to be the same as for the initial transmission or to be determined from the transport format and the resource allocation information of the initial transmission.

### SUMMARY

This application provides a data transmission method, so as to reduce complexity of a receiving device.

According to a first aspect, a data transmission method is provided, and includes: when a first device transmits at least one transport block TB for the first time, sending, by the first device, first control information to a second device, where the first control information includes a modulation and coding scheme (modulation and coding scheme, MCS) field, and the MCS field includes information about a modulation scheme used when the TB is sent and information about a transport block size TBS; and when the first device retransmits the TB, sending, by the first device, second control information to the second device, where the second control information includes a first field but does not include the MCS field and the information about the TBS. A length of the first field is the same as a length of the MCS field and a start location of the first field in the second control information is the same as a start location of the MCS field in the first control information. A length of the second control information is less than or equal to a length of the first control information. A modulation order and a code block group, CBG, index are jointly encoded in the first field and the CBG index indicates a relationship between retransmitted data and the TB. The relationship between the retransmitted data and the TB comprises: the retransmitted data is at least one code block, CB, group in the TB, and the CB group comprises at least one CB.

When receiving data, a receiving device usually needs to first detect control information corresponding to data transmission. Because the receiving device does not know when a sending device sends data to the receiving device, the receiving device needs to always perform detection for control information, to determine whether there is data sent to the receiving device. Because control information has a plurality of formats, the receiving device needs to perform blind detection for all possible formats of control information, to determine whether there is control information sent to the receiving device. According to the data transmission method provided in this application, a format of control information of initially transmitted data is reused as a format of control information of retransmitted data, so as to reduce a quantity of blind detections performed by the receiving device for control information, and reduce complexity of the receiving device.

In the first aspect, a start location of the first field in the second control information is the same as a start location of the MCS field in the first control information. In this implementation, the MCS field is completely reused for the first field, so as to implement a simpler design of a control channel, and reduce complexity of a receiver of the receiving device.

In the first aspect, a length of the second control information is less than a length of the first control information. The first field replaces the MCS field, and a length of the control information is reduced, so as to reduce overheads of a control channel, and improve transmission efficiency on an air interface.

According to a second aspect, a data transmission method is provided, and includes: when a second device receives data transmitted for the first time in at least one transport block TB from a first device, receiving, by the second device, first control information from the first device; parsing the first control infomration, where the first control information includes a modulation and coding scheme MCS field, and the MCS field includes information about a modulation scheme used when the TB is sent and information about a transport block size TBS; and when the second device receives retransmitted data in the TB from the first device, receiving, by the second device, second control information from the first device; and parsing the second control information, where the second control information includes a first field but does not include the MCS field and the infomration about the TBS. A length of the first field is the same as a length of the MCS field and a start location of the first field in the second control information is the same as a start location of the MCS field in the first control information. A length of the second control information is less than or equal to a length of the first control information. A modulation order and a code block group, CBG, index are jointly encoded in the first field and the CBG index indicates a relationship between retransmitted data and the TB. The relationship between the retransmitted data and the TB comprises: the retransmitted data is at least one code block, CB, group in the TB, and the CB group comprises at least one CB.

When receiving data, a receiving device usually needs to first detect control information corresponding to data transmission. Because the receiving device does not know when a sending device sends data to the receiving device, the receiving device needs to always perform detection for control information, to determine whether there is data sent to the receiving device. Because control information has a plurality of formats, the receiving device needs to perform blind detection for all possible formats of control information, to determine whether there is control information sent to the receiving device. According to the data transmission method provided in this application, a format of control information of initially transmitted data is reused as a format of control information of retransmitted data, so as to reduce a quantity of blind detections performed by the receiving device for control information, and reduce complexity of the receiving device.

In the second aspect, a start location of the first field in the second control information is the same as a start location of the MCS field in the first control information. In this implementation, the MCS field is completely reused for the first field, so as to implement a simpler design of a control channel, and reduce complexity of a receiver of the receiving device.

In the second aspect, a length of the second control information is less than a length of the first control information. The first field replaces the MCS field, and a length of the control information is reduced, so as to reduce overheads of a control channel, and improve transmission efficiency on an air interface.

According to a third aspect, a communications apparatus is provided, wherein the apparatus comprises means adapted to perform the method according to any one of the first aspect or the possible implementations of the first aspect.

According to a fourth aspect, a communications apparatus is provided, wherein the apparatus comprises means adapted to perform the method according to any one of the second aspect or the possible implementations of the second aspect.

According to a fifth aspect, a computer program comprising instructions is provided, wherein when executed by a communications apparatus, the instructions cause the communications apparatus to perform the method according to any one of the first or second aspect or the possible implementations of the first or second aspect.

### BRIEF DESCRIPTION OF DRAWINGS

FIG. 1 is a schematic architectural diagram of a communications system to which embodiments of this application are applied;
FIG. 2 is a schematic diagram of a data transmission method according to an embodiment of this application;
FIG. 2A is a schematic structural diagram of first control information and second control information according to an embodiment of this application;
FIG. 3 shows a time-frequency resource division manner according to an embodiment of this application;
FIG. 4 shows another time-frequency resource division manner according to an embodiment of this application;
FIG. 5 is a schematic diagram of another data transmission method according to a competitive example;
FIG. 5A is another schematic structural diagram of first control information and second control information according to an embodiment of this application;
FIG. 6 is a schematic diagram of another data transmission method according to a competitive example;
FIG. 6A is another schematic structural diagram of first control information and second control information according to a competitive example;
FIG. 6B is another schematic structural diagram of first control information and second control information according to a competitive example;
FIG. 6C is another schematic structural diagram of first control information and second control information according to a competitive example;
FIG. 7 is a schematic diagram of another data transmission method according to a competitive example;
FIG. 8 is a schematic diagram of another data transmission method according to an embodiment of this application;
FIG. 9 is a schematic diagram of another data transmission method according to an embodiment of this application;
FIG. 10 is a schematic structural diagram of a communications apparatus according to an embodiment of this application;
FIG. 11 is a schematic structural diagram of another communications apparatus according to an embodiment of this application;
FIG. 12 is a schematic structural diagram of another communications apparatus according to an embodiment of this application; and
FIG. 13 is a schematic structural diagram of another communications apparatus according to an embodiment of this application.

### DESCRIPTION OF EMBODIMENTS

The present invention is defined by the appended claims. In the following description, examples not falling under the scope of the claims are provided only as competitive examples.

A sending device and a receiving device in the embodiments of this application may be any device at a transmit end that transmit data and any device at a receive end that receives data in a wireless manner. The sending device and the receiving device may be any device having a wireless receiving and sending function, including, but not limited to, a NodeB (NodeB), an evolved NodeB (eNodeB), a base station in a fifth-generation (the fifth generation, 5G) wireless communications system, a base station or a network device in a future communications system, an access node in a WiFi system, a wireless relay node, a wireless backhaul node, and user equipment (user equipment, UE). The UE may also be referred to as a terminal (terminal), a mobile station (mobile station, MS), a mobile terminal (mobile terminal, MT), or the like. The UE may communicate with one or more core networks through a radio access network (radio access network, RAN), or access a distributed network in a self-organizing or grant-free manner. Alternatively, the UE may access a wireless network in another manner for communication, or the UE may directly perform wireless communication with another UE. This is not limited in the embodiments of this application.

The sending device and the receiving device in the embodiments of this application may be deployed on land, including indoor or outdoor, handheld, or in-vehicle deployment; or may be deployed on water; or may be deployed on an aircraft, a balloon, and a satellite in the air. The UE in the embodiments of this application may be a mobile phone (mobile phone), a tablet computer (Pad), a computer having a wireless receiving and sending function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. An application scenario is not limited in the embodiments of this application.

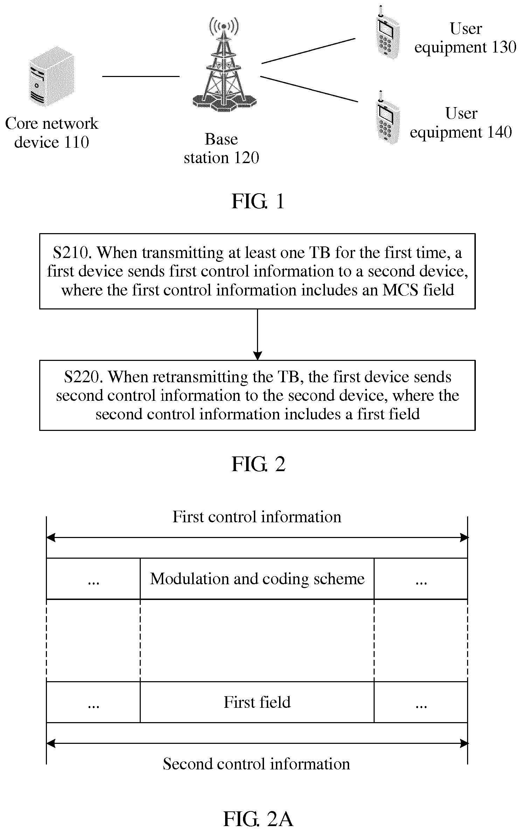

FIG. 1 is a schematic architectural diagram of a communications system to which embodiments of this application are applied. As shown in FIG. 1, the communications system includes a core network device 110, a base station 120, user equipment 130, and user equipment 140 that are connected in a wireless manner, a wired manner, or another manner. The user equipment 130 and the user equipment 140 may be still or moving. FIG. 1 is only a schematic diagram, and the communications system may further include another network device and/or another terminal device, which are/is not drawn in FIG. 1.

The embodiments of this application may be applied to downlink data transmission, or may be applied to uplink data transmission, or may be applied to device-to-device (device to device, D2D) data transmission. For the downlink data transmission, a sending device is a base station, and a corresponding receiving device is UE. For the uplink data transmission, a sending device is UE, and a corresponding receiving device is a base station. For the D2D data transmission, a sending device is UE, and a corresponding receiving device is also UE. This is not limited in the embodiments of this application.

In this application, the sending device is also referred to as a first device, and the receiving device is also referred to as a second device.

Both eMBB services and ultra-reliable and low latency communications (ultra-reliable and low latency communications, URLLC) services need to be supported in a 5G wireless communications system. Because of a large data amount and a high rate of eMBB traffic, a relatively high bandwidth and a relatively long time unit, for example, a slot, are normally occupied to schedule eMBB traffic once. However, URLLC traffic is generated sporadically and abruptly. When URLLC service data randomly arrives at a communications network, the URLLC service data cannot wait for completion of transmission of currently scheduled eMBB service data because of a strict latency requirement. Therefore, preemption (preemption) becomes a main solution in this scenario. Preemption means that the sending device is allowed to map the URLLC service data to a time-frequency resource that has been allocated to the eMBB service data for sending, and the eMBB service data stops to be sent on the time-frequency resource for sending the URLLC service data. The eMBB service data that stops to be sent is also referred to as service data punctured by the URLLC service data. To enable the receiving device to correctly decode the eMBB service data, the sending device needs to retransmit the punctured eMBB service data. To enable the receiving device to know data that is to be retransmitted by the sending device, the sending device needs to indicate the data to be retransmitted.

In this application, puncturing and preemption mean the same, and the two are interchangeable.

To retransmit the eMBB service data that is affected by puncturing, there may be different retransmission modes. For example, data in a CB that is affected by puncturing is retransmitted, or data in a CB group that is affected by puncturing is retransmitted, or data on a time-frequency resource that is affected by puncturing is retransmitted.

In this application, the foregoing retransmission is called special retransmission, where, for one TB, only data in CBs or CB groups that encounter a decoding error because of channel fading or interference is retransmitted, or only data in some CBs or CB groups that are affected by puncturing is retransmitted, or only data on a time-frequency resource that is affected by puncturing is retransmitted, or only data on a time-frequency resource that is affected by interference is retransmitted. It may be understood that in one special retransmission, both data that encounters a decoding error because of channel fading or interference and data that encounters a decoding error because of puncturing can be transmitted. In conventional retransmission, data in all CBs in the TB is retransmitted by using identical or different rate matching parameters. In this application, such retransmission is referred to as normal retransmission.

In this embodiment of this application, special retransmission also includes supplementary transmission. Supplementary transmission means that before receiving a NACK fed back by the receiving device, the sending device actively resends, to the receiving device, data on a time-frequency resource that is affected by preemption or data on a time-frequency resource that is affected by interference. Herein, supplementary transmission may be scheduling-based, or may be non-scheduling-based, that is, automatic supplementary transmission. Affected data may be at a granularity of a CB, or may be at a granularity of a CB group, or may be at a granularity of a time domain symbol, a mini-slot (mini-slot), a slot, or the like. A redundancy version (redundancy version, RV) for supplementary transmission may be the same as or different from that for initial transmission. Special retransmission in which the sending device retransmits some CBs or CB groups that encounter a decoding error because of channel fading or interference may be referred to as partial retransmission for short.

It may be understood that special retransmission may be performed on any time unit after the initial transmission. This is not limited in this embodiment of this application. The time unit herein may be a transmission time interval (transmission time interval, TTI), a slot, or a mini-slot (mini-slot). For example, the sending device may perform retransmission after receiving an ACK/a NACK fed back by the receiving device, or may perform retransmission before receiving an ACK/a NACK, or may immediately perform retransmission on a next time unit after the initial transmission, or may perform retransmission on the k-th time unit after the initial transmission. Herein, k is an integer greater than 0. In other words, assuming that a number of a time unit for the initial transmission is n, a number of a time unit for the retransmission is n+k, where n is an integer greater than or equal to 0.

It may be understood that a CB grouping manner is not limited in this application. In a possible CB grouping manner, grouping is performed according to an order of numbers of CBs in a TB, so that quantities of CBs included in groups are approximately equal. For example, a given TB includes 12 CBs. Assuming that a quantity of CB groups that is determined according to a predefined rule is 4, the 12 CBs may be evenly grouped into four CB groups. Numbers of the CBs in the four CB groups are respectively {1, 2, 3}, {4, 5, 6}, {7, 8, 9}, and {10, 11, 12}. If the TB includes 14 CBs, numbers of the CBs in the four CB groups are respectively {1, 2, 3}, {4, 5, 6}, {7, 8, 9, 10}, and {11, 12, 13, 14}, or {1, 2, 3, 4}, {5, 6, 7, 8}, {9, 10, 11}, and {12, 13, 14}. In another possible CB grouping manner, grouping is performed based on whether CBs are affected by resource preemption or interference. For example, CBs that are affected by resource preemption or interference are grouped into one or more groups, and CBs that are not affected by resource preemption and interference are grouped into one or more groups.

To provide a solution for retransmission indication in the foregoing special retransmission, an intuitive method is to add a new type of control information, to indicate data that is to be retransmitted in special retransmission.

When receiving data, the receiving device usually needs to first detect control information corresponding to data transmission. Because the receiving device does not know when the sending device sends data to the receiving device, the receiving device needs to always perform detection for control information, to determine whether there is data sent to the receiving device. Because control information has a plurality of formats, the receiving device needs to perform blind detection for all possible formats of control information, to determine whether there is control information sent to the receiving device. If a new control information format is added, a quantity of blind detections performed by the receiving device is increased. Consequently, complexity of the receiving device is increased.

This application provides a data transmission method. In this data transmission method, a format of control information of initially transmitted data is reused as a format of control information of retransmitted data, so as to reduce a quantity of blind detections performed by the receiving device for control information, and reduce complexity of the receiving device.

### Embodiment 1

FIG. 2 is a schematic diagram of a data transmission method according to this application. In this embodiment, an MCS field in control information is redefined to indicate special retransmission, and specifically, to indicate data in a TB that is to be retransmitted.

S210. When a first device transmits at least one TB for the first time (which is also referred to as initial transmission), the first device sends first control information to a second device, where the first control information includes an MCS field, and the MCS field includes at least one of information about a modulation scheme used when the TB is sent and information about a transport block size (transport block size, TBS).

For downlink data transmission, physical layer control information required for data transmission may be notified to a receiving device by using downlink control information (downlink control information, DCI). For uplink data transmission, physical layer control information may be notified to the receiving device by using uplink control information (uplink control information, UCI). For scheduling-based uplink data transmission, physical layer control information may also be sent by the receiving device to a sending device by using DCI.

It may be understood that data sent by the first device at once may include one or more TBs, which may be specifically determined based on factors such as available air interface resources, channel quality of a radio channel between the first device and the second device, and a resource allocation policy. For ease of description, one TB is used as an example for description below.

S220. When the first device retransmits the TB, the first device sends second control information to the second device, where the second control information includes a first field but does not include the MCS field, and the first field includes information about a relationship between retransmitted data and the TB.

Optionally, a length of the first field is the same as a length of the MCS field. Optionally, a start location of the first field in the second control information is the same as a start location of the MCS field in the first control information.

Further, a length of the second control information may be the same as a length of the first control information, or a length of the second control information may be less than or equal to a length of the first control information. It may be understood that, when the length of the second control information is the same as the length of the first control information, a quantity of blind detections performed by the receiving device for control information is not increased because the second control information is introduced, effectively reducing complexity of a receiver of the receiving device; or when the length of the second control information is less than the length of the first control information, overheads of a control channel can be reduced, and data transmission efficiency can be improved.

As shown in FIG. 2A, the length of the first control information is the same as the length of the second control information, and the location and the length of the MCS field are the same as the location and the length of the first field. This may also be understood as that the MCS field in the first control information is redefined for the second control information. Optionally, other fields of the first control information and the second control information are all the same.

The foregoing method may be understood as that the MCS field is reused for the first field, and the relationship between the retransmitted data and the TB is indicated by using the first field. This reusing method may alternatively be understood as follows: When a first device transmits at least one TB for the first time (which is also referred to as initial transmission), the first device sends first control information to a second device, where the first control information includes an MCS field, and the MCS field includes at least one of information about a modulation scheme used when the TB is sent and information about a TBS; and when the first device retransmits the TB, the first device sends second control information to the second device, where the second control information includes the first field, and the first field in the second control information indicates a relationship between retransmitted data and the TB.

Specifically, the relationship between the retransmitted data and the TB includes: the retransmitted data is at least one code block CB group in the TB, and the CB group includes at least one CB; or the retransmitted data is at least one CB in the TB; or the retransmitted data is data on Q first time-frequency resources of P first time-frequency resources on which the TB is transmitted for the first time, where Q is less than or equal to P, and P and Q are integers greater than 0. The first time-frequency resource includes at least one time domain symbol, or at least one mini-slot (mini-slot), or at least one slot, or at least one resource block (resource block, RB). The mini-slot includes at least one time domain symbol, the slot includes at least two time domain symbols, and the RB may be a physical RB or a virtual RB. The RB herein is used to indicate a time-frequency resource block that is contiguous in both time domain and frequency domain. A smallest unit in time domain is a time domain symbol, and a smallest unit in frequency domain is a subcarrier. A specific size of an RB may be related to a specific service, an application scenario, and a system. A possible definition is that a time-frequency resource corresponding to 12 contiguous subcarriers in frequency domain and seven contiguous symbols in time domain is one RB. The specific size of an RB is not limited in this application. For example, a time domain range corresponding to the RB is from one time domain symbol to 14 time domain symbols.

It may be understood that the relationship between the retransmitted data and the TB includes normal retransmission, partial retransmission in special retransmission, and supplementary transmission in special retransmission. That the sending device sends the second control information to the receiving device may also be understood as that the sending device sends a preemption indication to the receiving device, where the preemption indication herein may also be referred to as a puncturing indication, or may be understood as that the sending device sends indication information for auxiliary reception to the receiving device. For more detailed descriptions of the indication information for auxiliary reception and the puncturing indication, refer to Embodiment 7.

Specifically, in an example in which the retransmitted data is at least one CB group in the TB, the first field may be a number of a specific CB group in the TB, or may be used to indicate some CB groups in the TB in a form of a bitmap (bitmap). For example, the first field may indicate some CB groups in the TB by using a number of a length of four bits, and a bit sequence 0110 indicates a CB group whose number is 6. The first field may alternatively indicate some CB groups in the TB by using a bitmap of a length of four bits, and a bit sequence 0110 indicates the second CB group and the third CB group in the TB.

For data transmission, the format and content required by physical layer control information may vary with the scenario. By using DCI in a long term evolution (long term evolution, LTE) system as an example, DCI in formats such as formats 1, 1A, 1B, 1C, 1D, 2, 2A, 2B, and 2C is defined for downlink data transmission in different scenarios. DCI in each format may include an MCS field. The MCS field includes the information about the modulation scheme used when the TB is sent, the information about the modulation scheme used when the TB is sent, and the information about the transport block size TBS. A length of the MCS field may vary the format of the DCI. For example, for DCI whose format is format 1, an MCS field included in the DCI is 5-bit, and for DCI whose format is format 2, an MCS field included in the DCI is 10-bit, which may also be understood as that two MCS fields that each include five bits are respectively corresponding to modulation and coding schemes used for two transport blocks.

Table 1 shows a possible relationship between values of the MCS field and modulation schemes as well as TBSs. As shown in Table 1, for initial transmission, the value of the MCS field ranges from 0 to 28, to indicate modulation schemes and TBS information. The value 2 indicates that the modulation scheme is quadrature phase shift keying (quadrature phase shift keying, QPSK), the value 4 indicates 16 quadrature amplitude modulation (quadrature amplitude modulation, QAM), and the value 6 indicates 64QAM.

**Table 1**

| MCS index *I*_{MCS} | Modulation order (modulation order) *Qₘ* | TBS index *I*_{TBS} |
|---|---|---|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |
| 21 | 6 | 19 |
| 22 | 6 | 20 |
| 23 | 6 | 21 |
| 24 | 6 | 22 |
| 25 | 6 | 23 |
| 26 | 6 | 24 |
| 27 | 6 | 25 |
| 28 | 6 | 26 |
| 29 | 2 | Reserved |
| 30 | 4 | |
| 31 | 6 | |

Because a TBS for retransmission is the same as a TBS for the initial transmission, during the retransmission, in an embodiment according to the claimed invention the TBS is not indicated by using the MCS field. In this way, the MCS field may be used to indicate only the modulation scheme. A specific method for indicating the modulation scheme is the same as that used in the initial transmission. Alternatively, two bits may be used to indicate the modulation scheme, and the remaining three bits are used to indicate data in the TB that is to be retransmitted. Specifically, the three bits may be used to indicate retransmission of a CB or a CB group in the TB, or may be used to indicate retransmission of data on a time-frequency resource in the TB that is affected by puncturing, or may be used to indicate retransmission of data on a time-frequency resource in the TB that is affected by burst interference. The time-frequency resource herein may be at least one mini-slot, or at least one slot, or at least one RB. The RB herein may be a physical RB or a virtual RB. Alternatively, one bit may be used to indicate the modulation scheme, and the remaining four bits are used to indicate data in the TB that is to be retransmitted. It may be understood that a specific quantity of bits that are required to indicate the modulation scheme is related to a type of a modulation scheme supported in a data transmission process. For example, if *π*/2 binary phase shift keying (binary phase shift keying, BPSK), QPSK, 16QAM, 64QAM, and 256QAM need to be supported, three bits are required to indicate the modulation scheme.

For normal retransmission, the value of the MCS field ranges from 29 to 31, to respectively indicate three modulation schemes: QPSK, 16QAM, and 64QAM. Therefore, a new data indicator (new data indicator, NDI) in the DCI may be used to determine whether initial transmission or retransmission is performed, and then it is stipulated that when a most significant bit (most significant bit, MSB) in the MCS field is 1, it indicates normal retransmission, and when the MSB in the MCS field is 0, it indicates special retransmission.

After the MSB in the MCS field is used to distinguish between normal retransmission and special retransmission, for special retransmission, there are still two bits in the MCS field that may be used to indicate data in the TB that is to be retransmitted. A CB or a CB group may be retransmitted in a bit mapping manner. The two bits in the MCS field are used to indicate a CB in two CBs that is to be retransmitted, where one of the two CBs or both the two CBs are selected for retransmission, or are used to indicate a CB group in two CB groups that is to be retransmitted, where one of the two CB groups or both the two CB groups are selected for retransmission. For example, binary 11 indicates that data in both the two CBs or CB groups is to be retransmitted; binary 10 indicates that only data in the first CB or the first CB group is to be retransmitted; binary 01 indicates that only data in the second CB or CB group is to be retransmitted; and binary 00 indicates that the data in neither of the two CBs or CB groups is retransmitted. Alternatively, a CB or CB group to which data that is to be retransmitted belongs may be correspondingly using decimal values of the two bits, and retransmission of data in only one CB or CB group can be indicated once. For example, binary 00 indicates retransmission of data in the first CB or CB group; binary 01 indicates retransmission of data in the second CB or CB group; binary 10 indicates retransmission of data in the third CB or CB group; and binary 11 indicates retransmission of data in the fourth CB or CB group. Data on a time-frequency resource that is affected by puncturing may be retransmitted in a bit mapping manner. The two bits in the MCS field are used to indicate a time-frequency resource that is in two time-frequency resources and to which data that is to be retransmitted belongs, and data on one of the two time-frequency resources or data on both the two time-frequency resources is selected for retransmission. Alternatively, a time-frequency resource to which data that is to be retransmitted belongs may be correspondingly indicated using decimal values of the two bits, and retransmission of data on only one time-frequency resource can be indicated once. Indication methods of the foregoing two different types of special retransmission are similar, but indicated content is different.

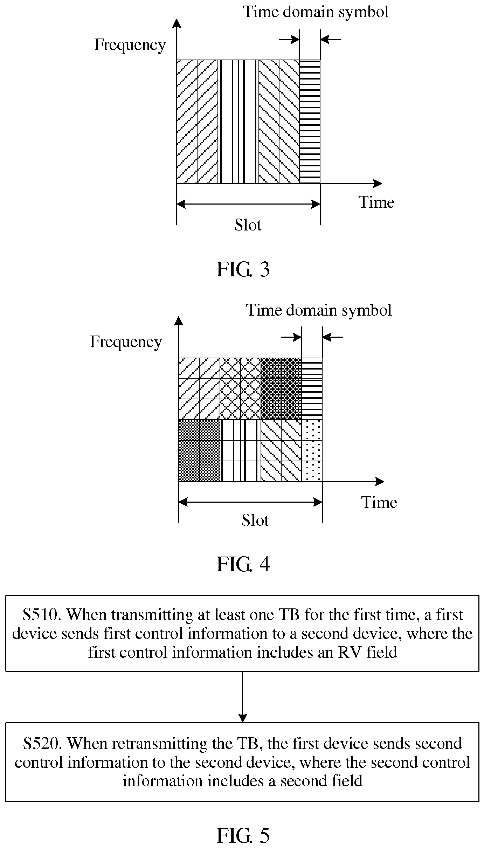

FIG. 3 shows a time-frequency resource division manner according to this application. As shown in FIG. 3, transmission is performed at a granularity of one slot. One slot includes seven time domain symbols, and the seven time domain symbols are divided into four first time-frequency resources. The first three first time-frequency resources each occupy two time domain symbols, and the last first time-frequency resource occupies one time domain symbol. One first time-frequency resource in FIG. 3 may also be referred to as a mini-slot. FIG. 4 shows another time-frequency resource division manner according to this application. To support a finer retransmission granularity, as shown in FIG. 4, seven time domain symbols in one slot are divided into eight first time-frequency resources. Each first time-frequency resource in FIG. 3 is divided into two parts, to obtain a time-frequency resource division result shown in FIG. 4. In FIG. 3 and FIG. 4, different first time-frequency resources are marked using different shadow patterns. It may be understood that FIG. 3 and FIG. 4 are merely a schematic diagram of one time-frequency resource division manner. A time-frequency resource division manner is not limited in this application.

Considering that a modulation scheme used for the retransmission is the same as that used for the initial or last retransmission, the five bits of the MCS field may be all used to indicate data in the TB that is to be retransmitted. After the MSB in the MCS field is used to distinguish between normal retransmission and special retransmission, for special retransmission, there are still four bits in the MCS field that may be used to indicate data in the TB that is to be retransmitted. Specifically, for how the five bits or the four bits indicate data retransmitted in special retransmission, directly refer to the foregoing indication manners performed by using two bits and three bits. D details are not described herein again.

The above describes reusing of the MCS field or some bits in the MCS field to indicate a relationship between the retransmitted data and a TB in the initial transmission. An example in which the relationship between the retransmitted data and the TB in the initial transmission is indicated by using a CBG index is used below to describe another embodiment in which the relationship between the retransmitted data and the TB in the initial transmission is indicated by reusing the MCS field. In this embodiment according to the claimed invention, a modulation order and a CBG index are jointly encoded to indicate, in the MCS field, both the modulation order and the relationship between the retransmitted data and the TB in the initial transmission, so as to further reduce overheads of a control channel. It may be understood that the CBG index is merely an example, and a method for indicating the relationship between the retransmitted data and the TB in the initial transmission is not limited in this embodiment of this application.

Table 2 shows a method for defining an MCS field for jointly encoding a modulation order and a CBG index according to an embodiment of the claimed invention. In other words, the MCS field includes information about the modulation order and information about the relationship between the retransmitted data and the TB in the initial transmission. There are 32 values in total for the MCS field of a length of five bits, and corresponding MCS index values are from 0 to 31. The CBG index in the table is a binary bit sequence. A corresponding bit 0 indicates no retransmission of a corresponding CBG, and a corresponding bit 1 indicates retransmission of a corresponding CBG. A bit sequence 0100 indicates retransmission of data in the third CBG. A most significant bit MSB is on the far left of the bit sequence, and a least significant bit (least significant bit, LSB) is on the far right of the bit sequence. CBG indexes 0000 and 1111 are not included in the table. This is because 0000 correspondingly indicates that no data needs to be transmitted, and 1111 indicates TB-level retransmission, and therefore there is no need to indicate a specific CBG that is to be retransmitted. In a scenario of at least three CBGs, a value of the modulation order is 2, in other words, there is a very low possibility that a corresponding modulation scheme is QPSK. Therefore, in the scenario of at least three CBGs, a value of the modulation order is only 4 or 6 in Table 2. It may be understood that meanings of bit values of the CBG index herein and a correspondence between bits in a bit sequence of the CBG index and specific CBGs are merely an example. This is not limited in this embodiment of this application.

**Table 2**

| MCS index *I*_{MCS} | modulation order (modulation order) *Qₘ* | CBG index |
|---|---|---|
| 0 | 2 | 0001 |
| 1 | 4 | 0001 |
| 2 | 6 | 0001 |
| 3 | 2 | 0010 |
| 4 | 4 | 0010 |
| 5 | 6 | 0010 |
| 6 | 2 | 0011 |
| 7 | 4 | 0011 |
| 8 | 6 | 0011 |
| 9 | 4 | 0100 |
| 10 | 6 | 0100 |
| 11 | 4 | 0101 |
| 12 | 6 | 0101 |
| 13 | 4 | 0110 |
| 14 | 6 | 0110 |
| 15 | 4 | 0111 |
| 16 | 6 | 0111 |
| 17 | 4 | 1000 |
| 18 | 6 | 1000 |
| 19 | 4 | 1001 |
| 20 | 6 | 1001 |
| 21 | 4 | 1010 |
| 22 | 6 | 1010 |
| 23 | 4 | 1011 |
| 24 | 6 | 1011 |
| 25 | 4 | 1100 |
| 26 | 6 | 1100 |
| 27 | 4 | 1101 |
| 28 | 6 | 1101 |
| 29 | 4 | 1110 |
| 30 | 6 | 1110 |
| 31 | 6 | Reserved |

In another possible unclaimed embodiment of this application, the MCS field may also include information about the modulation order, information about a TBS index, and information about the relationship between the retransmitted data and the TB in the initial transmission. This may also be understood as that the information about the modulation order, the information about the TBS index, and the information about the relationship between the retransmitted data and the TB in the initial transmission are jointly encoded.

For example, as shown in Table 3, a 6-bit MCS field may be defined. Table 3 shows a method for defining an MCS field for jointly encoding a modulation order, a TBS index, and a CBG index. In Table 3, values 0 to 28 of an MCS index may be used to indicate the information about the modulation order and the information about the TBS that are used for the initial transmission, and values 29 to 61 of the MCS index may be used to indicate the modulation order and the CBG index. For definitions of the modulation order, the TBS index, and the CBG index, refer to the foregoing related descriptions of Table 1 and Table 2.

**Table 3**

| MCS index *I*_{MCS} | Modulation order (modulation order) *Qₘ* | TBS index *I*_{TBS} | CBG index |
|---|---|---|---|
| 0 | 2 | 0 | |
| 1 | 2 | 1 | |
| 2 | 2 | 2 | |
| 3 | 2 | 3 | |
| 4 | 2 | 4 | |
| 5 | 2 | 5 | |
| 6 | 2 | 6 | |
| 7 | 2 | 7 | |
| 8 | 2 | 8 | |
| 9 | 2 | 9 | |
| 10 | 4 | 9 | |
| 11 | 4 | 10 | |
| 12 | 4 | 11 | |
| 13 | 4 | 12 | |
| 14 | 4 | 13 | |
| 15 | 4 | 14 | |
| 16 | 4 | 15 | |
| 17 | 6 | 15 | |
| 18 | 6 | 16 | |
| 19 | 6 | 17 | |
| 20 | 6 | 18 | |
| 21 | 6 | 19 | |
| 22 | 6 | 20 | |
| 23 | 6 | 21 | |
| 24 | 6 | 22 | |
| 25 | 6 | 23 | |
| 26 | 6 | 24 | |
| 27 | 6 | 25 | |
| 28 | 6 | 26 | |
| 29 | 2 | | 0001 |
| 30 | 4 | | 0001 |
| 31 | 6 | | 0001 |
| 32 | 2 | | 0010 |
| 33 | 4 | | 0010 |
| 34 | 6 | | 0010 |
| 35 | 2 | | 0011 |
| 36 | 4 | | 0011 |
| 37 | 6 | | 0011 |
| 38 | 4 | | 0100 |
| 39 | 6 | | 0100 |
| 40 | 4 | | 0101 |
| 41 | 6 | | 0101 |
| 42 | 4 | | 0110 |
| 43 | 6 | | 0110 |
| 44 | 4 | | 0111 |
| 45 | 6 | | 0111 |
| 46 | 4 | | 1000 |
| 47 | 6 | | 1000 |
| 48 | 4 | | 1001 |
| 49 | 6 | | 1001 |
| 50 | 4 | | 1010 |
| 51 | 6 | | 1010 |
| 52 | 4 | | 1011 |
| 53 | 6 | | 1011 |
| 54 | 4 | | 1100 |
| 55 | 6 | | 1100 |
| 56 | 4 | | 1101 |
| 57 | 6 | | 1101 |
| 58 | 4 | | 1110 |
| 59 | 6 | | 1110 |
| 60 | 4 | | 1111 |
| 61 | 6 | | 1111 |
| 62 | Reserved | | |
| 63 | | | |

It may be understood that the foregoing joint encoding methods in Table 2 and Table 3 are merely examples, and a person skilled in the art can further easily obtain other similar joint encoding methods. A specific joint encoding method is not limited in this application.

In a possible retransmission mode configuration, for a coexistence area of eMBB and URLLC, special retransmission is configured, and for a non-coexistence area of eMBB and URLLC, normal retransmission is configured. The coexistence area herein means that in this time-frequency resource area, both an eMBB service and a URLLC service can be scheduled, and the URLLC service may preempt resources for the eMBB service.

In another possible retransmission mode configuration, a retransmission mode is determined in an implicit indication manner. For example, the retransmission mode may be implicitly indicated by a magnitude of the TBS. For example, when the TBS is greater than a particular threshold, if a quantity of CBs obtained by segmenting the TB is greater than a threshold, it implicitly indicates special retransmission. A possible value of the threshold herein is 4.

An example in which the MCS field is 5-bit is used in the foregoing embodiment for description, but the MCS field may have different lengths in different systems or different scenarios of one system. This is not limited in this application.

### Example 2

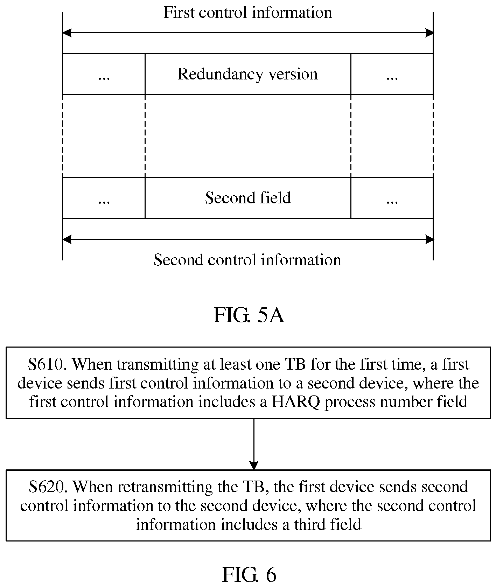

FIG. 5 is a schematic diagram of another data transmission method that is provided as a competitive example. In this example, a redundancy version (redundancy version, RV) field in control information is redefined to indicate special retransmission, and specifically, to indicate data in a TB that is to be retransmitted.

S510. When a first device transmits at least one TB for the first time, the first device sends first control information to a second device, where the first control information includes an RV field, and the RV field includes rate matching information used when the TB is sent for the first time.

S520. When the first device retransmits the TB, the first device sends second control information to the second device, where the second control information includes a second field but does not include the RV field, and the second field includes information about a relationship between retransmitted data and the TB.

Optionally, a length of the second field is the same as a length of the RV field. Optionally, a start location of the second field in the second control information is the same as a start location of the RV field in the first control information.

Further, a length of the second control information may be the same as a length of the first control information. Because the length of the second control information is the same as the length of the first control information, a quantity of blind detections performed by a receiving device for control information is not increased because the second control information is introduced, so as to effectively reduce complexity of the receiving device. As shown in FIG. 5A, the length of the first control information is the same as the length of the second control information, and the start location and the length of the RV field are the same as the start location and the length of the second field. This may also be understood as that the RV field in the first control information is redefined for the second control information. Optionally, other fields of the first control information and the second control information are all the same.

The length of the RV field may be two bits or four bits, or may be another value, which specifically depends on a quantity of supported RV versions. This is not limited in this application.

For a manner of redefining the RV field, directly refer to the manner of redefining the MCS field in Embodiment 1. Details are not described herein again. The only difference lies in that an MSB of the RV field cannot be used to indicate whether normal retransmission or special retransmission is performed.

### Example 3

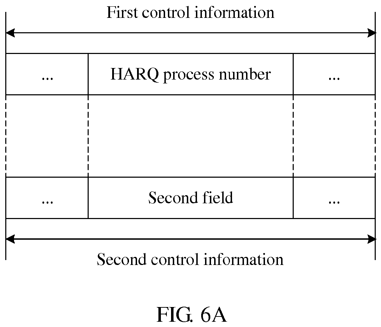

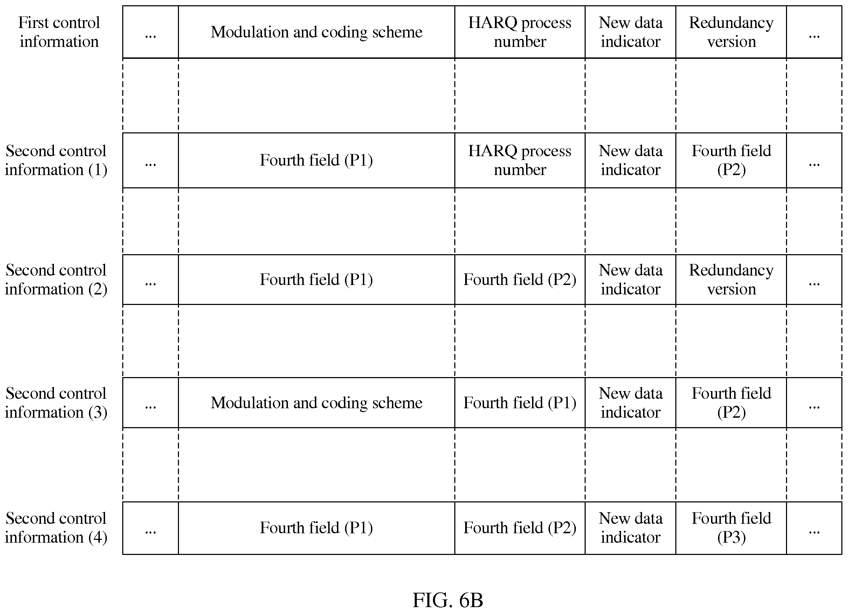

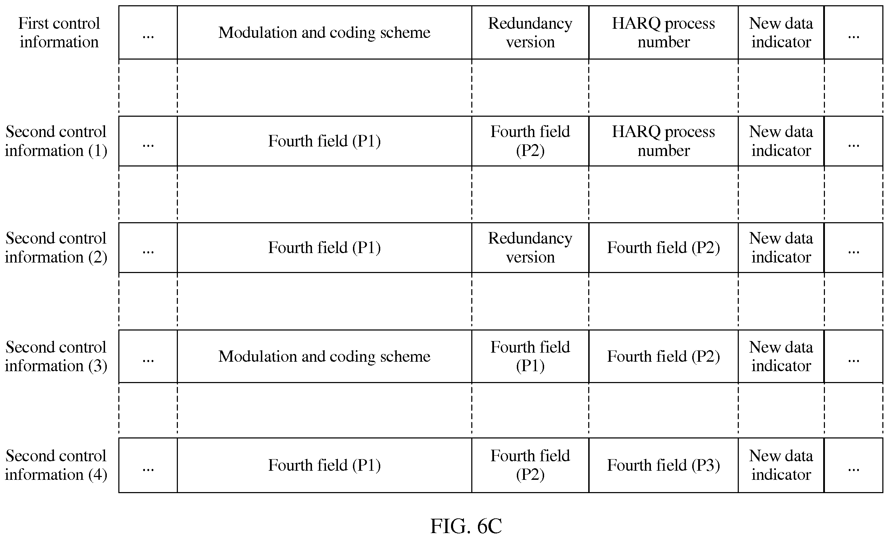

FIG. 6 is a schematic diagram of another data transmission method according to a competitive example. In this example, a HARQ process number field in control information is redefined to indicate special retransmission, and specifically, to indicate data in a TB that is to be retransmitted.

S610. When a first device transmits at least one TB for the first time, the first device sends first control information to a second device, where the first control information includes a HARQ process number field, and the HARQ process number field includes information about a HARQ process number used when the TB is sent for the first time.

S620. When the first device retransmits the TB, the first device sends second control information to the second device, where the second control information includes a third field but does not include the HARQ process number field, and the third field includes information about a relationship between retransmitted data and the TB.

Optionally, a length of the third field is the same as a length of the HARQ process number field. Optionally, a start location of the third field in the second control information is the same as a start location of the HARQ process number field in the first control information.

Further, a length of the second control information may be the same as a length of the first control information. Because the length of the second control information is the same as the length of the first control information, a quantity of blind detections performed by a receiving device for control information is not increased because the second control information is introduced, so as to effectively reduce complexity of the receiving device. As shown in FIG. 6A, the length of the first control information is the same as the length of the second control information, and the location and the length of the HARQ process number field are the same as the location and the length of the third field. This may also be understood as that the HARQ process number field in the first control information is redefined for the second control information. Optionally, other fields of the first control information and the second control information are all the same.

The length of the HARQ process number field may be three bits or four bits, or may be another value, which specifically depends on a quantity of supported HARQ processes. This is not limited in this application.

For a manner of redefining the HARQ process number field, directly refer to the manner of redefining the MCS field in Embodiment 1. Details are not described herein again. The only difference lies in that an MSB of the HARQ process number field cannot be used to indicate whether normal retransmission or special retransmission is performed.

### Embodiment 4

To indicate specific data in a TB that is to be retransmitted in special retransmission, Embodiment 1 and Example 2 and 3 described above may be further combined in this embodiment of this application. As shown in FIG. 6B, in a case (1), an MCS field and an RV field in control information may be redefined as a fourth field; in a case (2), an MCS field and a HARQ process number field may be redefined as a fourth field; in a case (3), a HARQ process number field and an RV field may be redefined as a fourth field; or in a case (4), an MCS field, an RV field, and a HARQ process number field in control information may be redefined as a fourth field. The fourth field in the figure is used to indicate data in the TB that is to be retransmitted. In the case (1), the case (2), and the case (3) in FIG. 6B, the fourth field includes two parts: P1 and P2. A sequence of P1 and P2 included in the fourth field is not limited in this application, in other words, P1 may be before P2, or P2 may be before P1. In the case (4) in FIG. 6B, the fourth field includes three parts: P1, P2, and P3. A sequence of P1, P2, and P3 included in the fourth field is not limited in this application.

As shown in FIG. 6B, the modulation and coding scheme field is adjacent to the HARQ process number field, and a new data indicator field is spaced between the HARQ process number field and the redundancy version field. However, FIG. 6B merely provides an example of relative locations of various fields in first control information. The various fields in the first control information may be further arranged in another manner. As shown in FIG. 6C, a sequence of the various fields is sequentially: a modulation and coding scheme field, a HARQ process number field, a new data indicator field, and a redundancy version field. It may be understood that the first control information includes the foregoing various fields, and the first control information may further include other fields that are not shown in the figure.

A plurality of fields are redefined, so that more bits can be used to indicate data in the TB that is to be retransmitted. For transmission of data of a same length, because the control information can indicate a finer granularity, invalid retransmission can be reduced, and retransmission efficiency can be improved. For how the fourth field indicates data in the TB that is to be retransmitted, directly refer to Embodiment 1 and Examples 2 and 3 described above. Details are not described herein again.

### Example 5

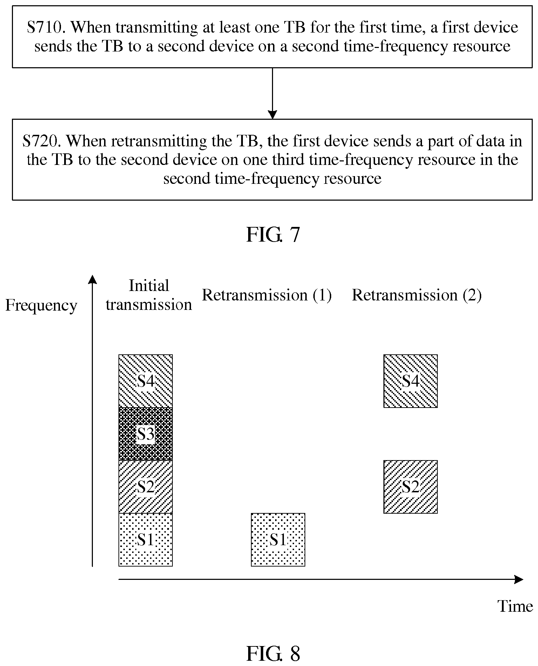

FIG. 7 is a schematic diagram of another data transmission method according to a further competitive example. In this example, data in a TB that is to be transmitted is implicitly indicated by using a time-frequency resource used for retransmission.

S710. When a first device transmits at least one TB for the first time, the first device sends the TB to a second device on a second time-frequency resource, where the second time-frequency resource includes at least two third time-frequency resources, and the third time-frequency resource includes at least one time domain symbol, or at least one mini-slot, or at least one slot, or at least one RB. For example, the second time-frequency resource includes P third time-frequency resources, and P is an integer greater than 2.

S720. When the first device retransmits the TB, the first device sends a part of data in the TB to the second device on one third time-frequency resource in the second time-frequency resource, where a location or an index value of the third time-frequency resource implicitly indicates data in the TB that is to be retransmitted.

The second time-frequency resource and the third time-frequency resource may be indicated in a resource block assignment (resource block assignment, RA) field, or may be indicated in another field. This is not limited in this application.

An example in which the third time-frequency resource includes the at least one RB is used to further describe this example. As shown in FIG. 8, it is assumed that 16 RBs are used when the TB is transmitted for the first time, indexes are respectively {x1, x2, ..., x16} in descending order, and the 16 RBs constitute the second time-frequency resource. The second time-frequency resource is divided into four third time-frequency resources that are contiguous in frequency domain, in a contiguous resource allocation manner. Indexes of RBs corresponding to the four third time-frequency resources are respectively S1={x1, x2, x3, x4}, S2={x5, x6, x7, x8}, S3={x9, x10, x11, x12}, and S4={x13, x14, x15, x16}. If indexes of RBs allocated for retransmission include only an index in S1, it indicates that data in the first CB or the first CB group or data on the first third time-frequency resource is to be retransmitted. If indexes of RBs allocated for retransmission include only indexes in S2 and S4, it indicates that data in the second CB and the fourth CB, or data in the second CB group and the fourth CB group, or data on the second third time-frequency resource and the fourth third time-frequency resource is to be retransmitted.

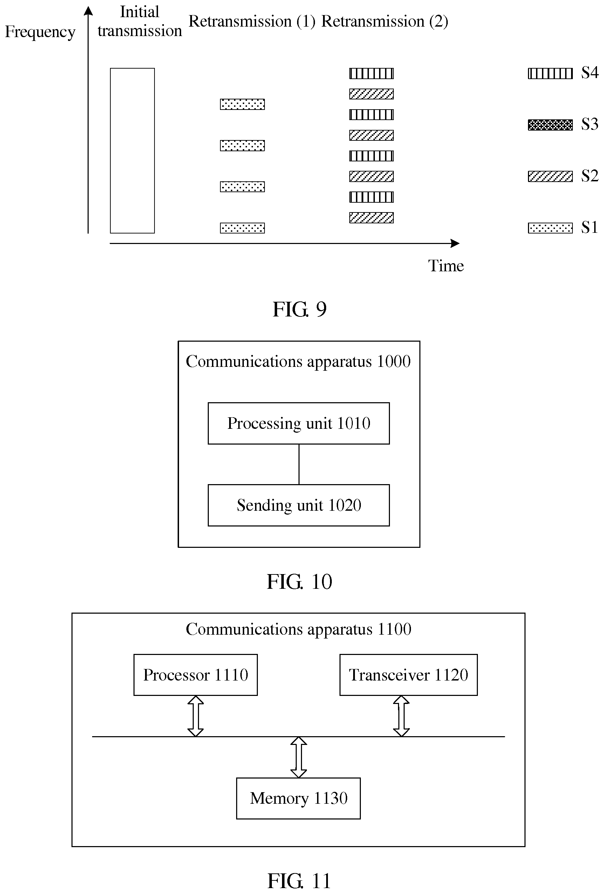

As shown in FIG. 9, it is assumed that 16 RBs are used when the TB is transmitted for the first time, indexes are respectively {x1, x2, ..., x16} in descending order, and the 16 RBs constitute the second time-frequency resource. The second time-frequency resource is divided into four third time-frequency resources in a discrete resource allocation manner. Indexes of RBs corresponding to the four third time-frequency resources are respectively S1={x1, x5, x9, x13}, S2={x2, x6, x10, x14}, S3={x3, x7, x11, x15}, and S4={x4, x8, x12, x16}. If indexes of RBs allocated for retransmission include only an index in S1, it indicates that data in the first CB or the first CB group or data on the first third time-frequency resource is to be retransmitted. If indexes of RBs allocated for retransmission include only indexes in S2 and S4, it indicates that data in the second CB and the fourth CB, or data in the second CB group and the fourth CB group, or data on the second third time-frequency resource and the fourth third time-frequency resource is to be retransmitted.

In addition, data in the TB that is to be retransmitted may be further implicitly indicated by using an index number of an RB allocated for retransmission. For example, a modulo operation may be performed, by using an index number of an RB, on a quantity of CBs used during initial transmission, to indicate a CB to which currently retransmitted data belongs; or a modulo operation may be performed, by using an index number of an RB, on a quantity of CB groups used during initial transmission, to indicate a CB group to which currently retransmitted data belongs; or a modulo operation may be performed, by using an index number of an RB, on a quantity of time-frequency resources used during initial transmission, to indicate a time-frequency resource to which currently retransmitted data belongs. The index number of the RB may be a smallest index number of an RB in a time-frequency resource used during retransmission, or may be a largest or smallest index number of an RB in a time-frequency resource used during retransmission, or all index numbers in a time-frequency resource used during retransmission that satisfy one of the foregoing conditions. For example, assuming that four CB groups are included when the TB is transmitted for the first time, if the first CB group needs to be retransmitted, a smallest value of an index number of an RB in a time-frequency resource allocated for retransmission may satisfy 4*x+1, where x is an integer; or if the third CB group needs to be retransmitted, a smallest value of an index number of an RB in a time-frequency resource allocated for retransmission satisfies 4*x+3.

The third time-frequency resource and how to indicate data in the TB that is to be retransmitted are described above by using an example from a dimension of frequency domain, and an example is used below for description from a dimension of time domain. The third time-frequency resource may include at least one time domain symbol at a granularity of a time domain symbol, or may include at least one mini-slot at a granularity of a mini-slot, or may include at least one slot at a granularity of a slot, or may be based on a granularity of another time domain unit. This is not limited in this application.

For example, a time-frequency resource of one slot is used when the TB is transmitted for the first time, and the slot includes a plurality of mini-slots. If a time-frequency resource of one mini-slot is used during retransmission, a number of the mini-slot in the slot may be used to indicate currently retransmitted data in the TB. For another example, slot aggregation transmission of a plurality of slots is used when the TB is transmitted for the first time. If a time-frequency resource of one or more slots is used during retransmission, a number of the slot used during the retransmission in the slot aggregation transmission may be used to indicate currently retransmitted data in the TB.

Assuming that four slots are used as a scheduling period, time-frequency resources of four slots are allocated for initial transmission of data. The data that is transmitted for the first time is divided into four CB groups. If the first CB group needs to be retransmitted, only the first slot in the four slots needs to be allocated during retransmission. If the third CB group needs to be retransmitted, only the third slot in the four slots needs to be allocated during retransmission. For another example, one slot is used as a scheduling period, and a time-frequency resource of one slot is allocated for initial transmission of data. The data that is transmitted for the first time is divided into four CB groups, and one slot includes four mini-slots. If the first CB group needs to be retransmitted, only the first mini-slot in the slot needs to be allocated for retransmission. If the third CB group needs to be retransmitted, only the third mini-slot in the slot needs to be allocated for retransmission. More generally, for retransmission of data on a time-frequency resource that is affected by puncturing of URLLC service data, a location of the time-frequency resource allocated for retransmission is the same as a location of the time-frequency resource that is affected by puncturing of the URLLC service data. For example, if data on a time-frequency resource of an upper half part of the second mini-slot in the initial transmission of the TB is punctured, a bandwidth of the upper half part of the second mini-slot in the slot is also allocated for retransmission.

It may be understood that the third time-frequency resource herein may also be the first time-frequency resource in FIG. 3 or FIG. 4, and the corresponding second time-frequency resource is a time-frequency resource of one slot in FIG. 3 and FIG. 4.

### Embodiment 6

In the embodiments and examples described above, to distinguish between normal retransmission and special retransmission, a specific bit in an existing field in control information may be used for indication. For example, as shown in Embodiment 1, the MSB or the LSB of the MCS field is used for indication. There may be alternatively the following several possible methods.

In a possible method, higher layer signaling is used to indicate whether special retransmission is supported, to indicate that physical layer control information used during special retransmission is which solution in the embodiments and examples described above, for example, to indicate whether the solution of reusing the MCS field in Embodiment 1 or the solution of reusing the MCS field and the RV field in Embodiment 4 is used. The higher layer signaling may be radio resource control (radio resource control, RRC) layer signaling or medium access control (medium access control, MAC) layer signaling.

In a possible method, a new field is added to physical layer control information, to indicate whether retransmission corresponding to the control information is normal retransmission or special retransmission, or to indicate whether there is an MCS field or the like, or to indicate whether an MCS field or the like is parsed through reusing. The field may further indicate whether special retransmission is retransmission of data in a CB that encounters a decoding error or data in a CB group that encounters a decoding error or retransmission of data on a time-frequency resource that is affected by puncturing. The physical layer control information herein may be DCI or UCI. The newly added field may be 1-bit, to indicate whether retransmission of all data corresponding to the control information is normal retransmission or special retransmission. The newly added field may alternatively be 2-bit, to indicate retransmission of all data corresponding to the control information is normal retransmission, or retransmission of data in some CBs or some CB groups, o retransmission of data on a time-frequency resource that is affected by puncturing. The newly added field may alternatively be multi-bit. Each bit or every two bits are used to indicate whether transmission of corresponding data in one CB or one CB group or corresponding data on one time-frequency resource is normal retransmission or special retransmission. The field may further indicate whether the retransmission is supplementary transmission in special retransmission.

In a possible method, different formats of control information are used to distinguish between different retransmission types. For example, for normal retransmission, format 1 is used, and for special retransmission, format 2 is used. A receiving device may know a currently used retransmission mode by blindly detecting a format of control information.

In a possible method, a cyclic redundancy check (cyclic redundancy check, CRC) bit sequence of control information is scrambled by using different sequences, to distinguish between retransmission types. A CRC bit sequence generated by control information for normal retransmission is scrambled by using a sequence 1, and a CRC bit sequence generated by control information for special retransmission is scrambled by using a sequence 2. The receiving device may know a current retransmission type by detecting a scrambling sequence used for a CRC of control information. The sequence 1 and the sequence 2 herein may be radio network temporary identifiers (radio network temporary identifier, RNTI).

In a possible method, a location of control information is used to distinguish between retransmission types. The retransmission types may be distinguished between each other based on a time-frequency resource on which the control information is located. When the time-frequency resource on which the control information is located is an RB set 1 or a subband 1, it indicates normal retransmission, and otherwise, it indicates special retransmission. Alternatively, when the time-frequency resource on which the control information is located is an RB set 2 or a subband 2, it indicates special retransmission, and otherwise, it indicates normal retransmission. The retransmission types may alternatively be distinguished between each other based on search space in which the control information is located. When the control information is located in UE-specific search space, it indicates normal retransmission, and otherwise, it indicates special retransmission. Alternatively, when the control information is located in common search space, it indicates special retransmission, and otherwise, it indicates normal retransmission. Alternatively, when the control information is located in UE-specific search space, it indicates special retransmission, and otherwise, it indicates normal retransmission.

In a possible method, a retransmission type is implicitly indicated by using a retransmission occasion. For example, before the receiving device feeds back an ACK/a NACK, the receiving device blindly detects control information by using a format of control information for special retransmission, and parses the control information based on the format of control information for special retransmission. After the receiving device feeds back the ACK/NACK, the receiving device blindly detects control information by using a format of control information for normal retransmission, and parses the control information based on the format of control information for normal retransmission.

In a possible method, a combination of a plurality of fields is used to distinguish between retransmission types. For example, if an NDI indicates new transmission, and an RV is a non-zero value, parsing is performed based on a format of control information for special retransmission.

In a possible method, a combination of at least two of the foregoing methods is used. For example, before the receiving device feeds back an ACK/a NACK, the receiving device blindly detects and parses control information based on a format of control information for special retransmission. After the receiving device feeds back the ACK/NACK, if an NDI indicates new transmission and an RV is a non-zero value, the receiving device parses the control information based on the format of control information for special retransmission, and otherwise, the receiving device parses the control information based on a format of control information for normal retransmission.

An example in which a TB including four CB groups is transmitted is used below to describe processes of normal retransmission and special retransmission. Assuming that a time-frequency resource for the third CB group in the four CB groups used during initial transmission is preempted, when the TB is retransmitted, a retransmission type is set to special retransmission, and retransmission of the third CB group is indicated. After receiving the retransmitted control information, the receiving device clears buffer data of the third CB group that is received during the initial transmission, does not participate in HARQ combination of retransmitted data, and places data received during the retransmission into a buffer of the third CB group for decoding. If the four CB groups used during the initial transmission are not preempted, but the third CB group encounters a decoding error only because of radio channel fading, a retransmission type in control information of the retransmitted data is set to normal retransmission, and the third CB group is retransmitted. After receiving the retransmitted control information, the receiving device performs HARQ combination on the data of the third CB group that is received during the retransmission and the data of the third CB group that is received during the initial transmission, and then performs decoding.

### Example 7

Specific data that is to be retransmitted needs to be indicated in control information for special retransmission in the embodiments and examples described above, and there is another possible implementation method in which data that is to be retransmitted is determined with reference to another indication. For example, when URLLC service data preempts a time-frequency resource for eMBB service data, a sending device may indicate, to a receiving device with reference to a puncturing indication, a time-frequency resource, for the eMBB service data, to which data that is punctured belongs, so that during retransmission, the sending device can retransmit only data on the time-frequency resource that is affected by puncturing. Correspondingly, the retransmission is special retransmission, and there are the following three different design methods for control information for special retransmission:
(1) Only a retransmission type indication may be added to indicate that current retransmission is special retransmission, and other fields of special retransmission may be consistent with other fields of normal retransmission.
(2) Alternatively, for the control information for special retransmission, only specific data that is to be retransmitted may be indicated, and the receiving device may know, based on a process number, that special retransmission is performed in this case. Therefore, there is no need to indicate a retransmission type.
(3) Alternatively, for the control information for special retransmission, there is no need to indicate a retransmission type and specific data that is to be retransmitted, and the receiving device may know, based on a process number, that current retransmission is special retransmission, and may know, based on the received puncturing indication, data that is to be retransmitted.

For the retransmission type indication herein, refer to Embodiment 6. The puncturing indication may be an indication on a punctured symbol or mini-slot, or may be an indication on the last symbol or mini-slot for current eMBB service data transmission. For example, assuming that the current eMBB service data transmission occupies one slot, an indication may be performed on the last symbol of the slot. A puncturing indication manner is not limited in this application.

The puncturing indication herein is also referred to as indication information for auxiliary reception that is sent by the sending device to the receiving device. When eMBB service data is affected by preemption of URLLC service data or other interference, the sending device may send the indication information for auxiliary reception to the receiving device. The indication information for auxiliary reception is used to notify the receiving device of an area affected by the preemption or the interference, to assist the receiving device in receiving and decoding data. After receiving the indication information for auxiliary reception, the receiving device may discard data in a corresponding affected area, and the data in the area does not participate in decoding and HARQ combination, so as to improve a decoding success rate and improve data transmission efficiency. The sending device may retransmit only the data in the affected area with reference to the indication information for auxiliary reception. In this application, meanings of the puncturing indication and the indication information for auxiliary reception are the same, and the two can be replaced with each other.

In the design methods (1) and (3) for control information for retransmission, the receiving device may determine currently retransmitted data with reference to the content of the indication information for auxiliary reception according to the following method:
(a) When the indication information for auxiliary reception indicates a specific time-frequency area such as some or all time-frequency resources on the second and the third time domain symbols, the retransmitted data is all data on these time-frequency resources in the TB or a CB or a CB group in the TB that overlaps these time-frequency resources.
(b) When the indication information for auxiliary reception indicates a specific CB, the retransmitted data is the specific CB or a CB group including the specific CB. The indication information for auxiliary reception may indicate a specific CB by indicating a number of the CB or a bitmap of the CB.
(c) When the indication information for auxiliary reception indicates a specific CB group, the retransmitted data is the specific CB group. The indication information for auxiliary reception may indicate a specific CB group by indicating a number of the CB group or a bitmap of the CB group.

It may be understood that, when the sending device performs special retransmission after receiving an ACK/a NACK fed back by the receiving device, the sending device may no longer retransmit data in a CB or a CB group for which an ACK is fed back or data on a time-frequency resource for which an ACK is fed back.

### Embodiment 8

In the embodiments and examples described above, it is indicated that a range of retransmitted data in special retransmission is limited by a quantity of bits used for the indication in control information. For example, when an MCS field is reused in Embodiment 1, if a variable modulation scheme is supported, only two bits may be used to indicate the range of the retransmitted data. To expand an indication range, a new field may be introduced to the control information or a quantity of bits in a reused field may be increased, to support a larger indication range. For example, six bits may be simultaneously used to support retransmission indications of six CB groups.

The method embodiment is mainly described from a perspective of the sending device in the embodiments and examples described above. It may be understood that the method may also be applied to the receiving device. With reference to the method of the sending device, correspondingly, the receiving device receives related information, and then may perform processing according to the method corresponding to the sending device. Details are not described herein.

### Example 9

The foregoing embodiments are mainly described from a perspective of how to design a retransmission indication. An example in which data in a CB group that is affected by puncturing is retransmitted is used below to describe a data transmission process from perspectives of processing processes of the sending device and the receiving device. For ease of description, it is assumed that one TB includes four CB groups, data in the third CB group encounters a decoding error because URLLC service data preempts some time-frequency resources, and the first CB group encounters a decoding error because of channel fading. It is assumed that a feedback 1 indicates a NACK, and a feedback 0 indicates an ACK. It may be assumed that an NDI 0 in control information indicates initial transmission, and an NDI 1 indicates retransmission; or non-reversal of an NDI indicates retransmission, and reversal of an NDI indicates new transmission. Reversal herein means that an NDI changes from 0 to 1 or changes from 1 to 0. A same NDI may be set for all CB groups, or an NDI may be set for each CB group. In this case, new transmission or retransmission may be independently indicated for each CB group. An NDI field may be used to indicate whether current transmission of data in a CB or a CBG or data on a time-frequency resource is new transmission, normal retransmission, or special retransmission, and the NDI may further indicate whether the current special retransmission is partial retransmission or supplementary transmission. A name of the NDI herein is merely an example, and the name of the NDI is not limited in this application. These assumptions are merely for ease of description, and can be appropriately adjusted during actual application.

A multi-bit feedback described below is introduced by the receiving device to indicate, to the sending device, a part of currently transmitted data that encounters a decoding error. In an example in which one TB includes four CB groups, after the receiving device receives the TB, the first CB group and the third CB group encounter a decoding error, and the receiving device may feed back 4-bit ACK/NACK information such as 1010 to the sending device. It may be understood that for the multi-bit feedback, a plurality of bits are fed back when needed. If one TB includes only one CB group, only one bit may be fed back. A quantity of bits that are fed back may be determined by using a plurality of methods. A method for determining a quantity of bits that are fed back is not limited in this application.

A location for sending indication information for auxiliary reception is not limited in this application. For example, the indication information for auxiliary reception may be carried at the end of a current time unit, or may be carried in DCI of a next time unit, or may be carried in DCI of a time unit for retransmission or special retransmission in a current process. The sending device may send the indication information for auxiliary reception before receiving an ACK/a NACK, or may send the indication information for auxiliary reception after receiving an ACK/a NACK.

It may be understood that in this example, an assumption that one TB includes four CB groups is merely an example. This is not limited in this application. Supplementary transmission of the third preempted CB group is described in all the following solutions. All CBs that are affected by preemption may be determined based on a time-frequency resource indicated by the indication information for auxiliary reception, to serve as one CB group for supplementary transmission, or the indication information for auxiliary reception may directly indicate numbers or bitmaps of all preempted CB groups.

Solution 1: A multi-bit feedback is combined with a retransmission indication. After receiving data in the TB, the receiving device feeds back a binary sequence 1010 based on a decoding result, to indicate that the first and the third CB groups encounter a decoding error. After receiving the feedback, the sending device may send control information by using the indication method for special retransmission in Embodiment 1 to Embodiment 8 described above, or may indicate retransmission of the first and the third CB groups in a manner that is not limited to the manner in this example of this application. After receiving the control information for retransmission and the data, the receiving device performs data processing. An example is as follows: (1) Optionally, the NDI indicates retransmission of both the first CB group and the third CB group, so that HARQ combination with previously transmitted data is performed. (2) Alternatively, optionally, the NDI indicates new transmission of both the first CB group and the third CB group. In this case, corresponding data in the first CB group and data in the third CB group may be transmitted, or data in the first CB group and data that is in the third CB group and that is corresponding to a location of a preempted resource may be transmitted, so that previous corresponding buffer data is erased, and corresponding buffer data is updated with received data. (3) Alternatively, optionally, the third bit in an NDI field of four bits is used to indicate new transmission of the third CB group, and another CB group is not retransmitted. In this case, corresponding data in the third CB group may be data in the complete third CB group, or may be data that is in the third CB group and that is corresponding to a location of a preempted resource. In addition, optionally, the first bit in the NDI field is used to indicate retransmission of the first CB group. After receiving the retransmitted control information and data, a receive end performs data processing, for example, performs HARQ combination on initially transmitted data and retransmitted data in the first CB group, erases previous corresponding buffer data in the third CB group, updates the corresponding buffer with newly received data in the third CB group, and performs decoding and feeds back a decoding result.

Solution 2: Indication information for auxiliary reception is combined with a multi-bit feedback and a retransmission indication. After resource preemption occurs in a data sending process, the sending device may send indication information for auxiliary reception, which is, for example, 1-bit, to indicate whether resource preemption occurs in current data transmission. The receiving device determines, according to whether the indication information for auxiliary reception is received, a quantity of bits that are fed back. Optionally, the quantity of bits that are fed back by the receiving device may be determined according to the indication information for auxiliary reception. If the indication information for auxiliary reception is received, a plurality of bits are fed back, in other words, four bits 1010 (indicating a NACK for the first and the third CB groups) are fed back, and otherwise, a 1-bit NACK is fed back optionally. Optionally, the quantity of bits that are fed back by the receiving device may be determined without using the indication information for auxiliary reception. For example, a multi-bit feedback may be performed according to a normal procedure. After receiving the feedback, the sending device may send control information by using the indication method for the retransmission in the embodiments and examples described above, or may indicate retransmission of the first and the third CB groups in a manner that is not limited to the manner in this example. After receiving the control information for retransmission and the data, the receiving device performs data processing. An example is as follows: Optionally, the NDI indicates retransmission of the first CB group and the third CB group, so that HARQ combination with previously transmitted corresponding data is performed. Alternatively, optionally, the NDI indicates new transmission of the first CB group and the third CB group. In this case, corresponding data in the first CB group and data in the third CB group may be transmitted, or data in the first CB group and data that is in the third CB group and that is corresponding to a location of a preempted resource may be transmitted, so that previous corresponding buffer data is erased, and corresponding buffer data is updated with newly received data, and then decoding is performed and a decoding result is fed back.

Solution 3: Indication information for auxiliary reception is combined with a multi-bit feedback and a retransmission indication. After resource preemption occurs in a data sending process, the sending device may send indication information for auxiliary reception, which is, for example, 1-bit, to indicate whether resource preemption occurs in current data transmission. The receiving device determines, according to whether the indication information for auxiliary reception is received, a quantity of bits that are fed back. Optionally, the quantity of bits that are fed back by the receiving device may be determined according to the indication information for auxiliary reception. If the indication information for auxiliary reception is received, a plurality of bits are fed back, in other words, four bits 1010 (indicating a NACK for the first and the third CB groups) are fed back, and otherwise, a 1-bit NACK is fed back optionally. Optionally, the quantity of bits that are fed back by the receiving device may be determined without using the indication information for auxiliary reception. For example, a multi-bit feedback may be performed according to a normal procedure. After receiving the feedback, the sending device may send control information by using the indication method for special retransmission in the embodiments and examples described above, or may indicate retransmission of the first and the third CB groups in a manner that is not limited to the manner in this example. In addition, optionally, the NDI is used to indicate new transmission of the third CB group. In this case, corresponding data in the third CB group may be data in the complete third CB group, or may be data that is in the third CB group and that is corresponding to a location of a preempted resource. In addition, optionally, the NDI is used to indicate retransmission of the first CB group. After receiving the retransmitted control information and data, a receive end performs data processing, for example, performs HARQ combination on initially transmitted data and retransmitted data in the first CB group, erases previous corresponding buffer data in the third CB group, updates the corresponding buffer with newly received data in the third CB group, and performs decoding and feeds back a decoding result. In addition to the retransmission type indication such as the NDI, some other independent fields may be further introduced into each CB group. For example, each CB group may have an independent RV field.

Solution 4: Indication information for auxiliary reception is combined with a multi-bit feedback and a retransmission indication. After resource preemption occurs in a data sending process, the sending device may send indication information for auxiliary reception, which is, for example, 1-bit, to indicate whether resource preemption occurs in current data transmission. The receiving device determines, according to whether the indication information for auxiliary reception is received, a quantity of bits that are fed back. Optionally, the quantity of bits that are fed back by the receiving device may be determined according to the indication information for auxiliary reception. If the indication information for auxiliary reception is received, a plurality of bits are fed back, in other words, four bits 1010 (indicating a NACK for the first and the third CB groups) are fed back, and otherwise, a 1-bit NACK is fed back optionally. Optionally, the quantity of bits that are fed back by the receiving device may be determined without using the indication information for auxiliary reception. For example, a multi-bit feedback may be performed according to a normal procedure. After receiving the feedback, the sending device may send control information by using the indication method for special retransmission in the embodiments and examples described above, or may indicate retransmission of the third CB group in a manner that is not limited to the manner in the present invention. In addition, optionally, the NDI is used to indicate new transmission of the third CB group. In this case, corresponding data in the third CB group may be data in the complete third CB group, or may be data that is in the third CB group and that is corresponding to a location of a preempted resource. After receiving the retransmitted control information and data of the third CB group, the receiving device performs data processing, for example, erases previous corresponding buffer data in the third CB group, updates the corresponding buffer with newly received data in the third CB group, and performs decoding and feeds back a decoding result. After the third CB group is retransmitted, the first CB group is individually retransmitted. In addition, optionally, the NDI is used to indicate retransmission of the first CB group, and a retransmission indication method is the same as that for the third CB group. After receiving the retransmitted control information and data of the first CB group, the receiving device performs data processing, for example, performs HARQ combination with the previously received data of the first CB group, and then performs decoding and feeds back a decoding result.

Solution 5: A 1-bit feedback is combined with a special retransmission indication. After receiving data in a TB, the receiving device feeds back a 1-bit NACK if a CB encounters a decoding error. The sending device determines retransmitted data and control information based on a feedback result and whether resource preemption occurs in a previous transmission process. After receiving the feedback, the sending device may send control information by using the indication method for special retransmission in the embodiments and examples described above, to indicate retransmission of the first and the third CB groups, and indicate retransmission of the third CB group that is performed because of impact of puncturing, and retransmission of the first CB group that is performed because of no impact of puncturing. After receiving the retransmitted control information and data, a receive end performs data processing, for example, performs HARQ combination on initially transmitted data and retransmitted data in the first CB group, erases previous buffer data in the third CB group that is affected by the puncturing, and feeds back a decoding result based on a processing result. In addition to the retransmission type indication, other independent fields may be further introduced into each CB group. For example, each CB group may have an independent RV field.

Solution 6: A 1-bit feedback is combined with a retransmission indication. After receiving data in a TB, the receiving device feeds back a 1-bit NACK if a CB encounters a decoding error. The sending device determines retransmitted data and control information based on a feedback result and whether resource preemption occurs in a previous transmission process. After receiving the feedback, the sending device may send control information by using the indication method for special retransmission in the embodiments and examples described above, or may indicate retransmission of the third CB group in a manner that is not limited to the manner in the embodiments of this application. In addition, optionally, the NDI is used to indicate new transmission of the third CB group. In this case, corresponding data in the third CB group may be data in the complete third CB group, or may be data that is in the third CB group and that is corresponding to a location of a preempted resource. After receiving the retransmitted control information and data of the third CB group, the receiving device performs data processing, for example, erases previous corresponding buffer data in the third CB group, updates the corresponding buffer with newly received data in the third CB group, and performs decoding and feeds back a decoding result. After the third CB group is retransmitted, the first CB group is individually retransmitted. In addition, optionally, the NDI is used to indicate retransmission of the first CB group, and a retransmission indication method is the same as that for the third CB group. After receiving the retransmitted control information and data of the first CB group, the receiving device performs data processing, for example, performs HARQ combination with the previously received data of the first CB group, and then performs decoding and feeds back a decoding result.

Solution 7: Indication information for auxiliary reception is combined with a 1-bit feedback and a retransmission indication. After resource preemption occurs in a data sending process, the sending device may send indication information for auxiliary reception, which is, for example, N-bit, to indicate a number or a bitmap of a preempted CB group, or to indicate location information of a preempted time-frequency resource. The receiving device erases, according to the indication information for auxiliary reception, previous buffer data that is affected by puncturing. The erasing operation may be performed before channel decoding and a feedback, or may be performed after channel decoding and a feedback. If the decoding fails, the receiving device feeds back a 1-bit NACK. After receiving the feedback, the sending device may send control information by using the indication method for special retransmission in the embodiments and examples described above, or may indicate retransmission of the third CB group in a manner that is not limited to the manner in this example. In addition, optionally, the NDI is used to indicate retransmission of the third CB group. In this case, corresponding data in the third CB group may be data in the complete third CB group, or may be data that is in the third CB group and that is corresponding to a location of a preempted resource. After receiving the retransmitted control information and data of the third CB group, the receiving device performs data processing, for example, performs HARQ combination with the previously received data of the third CB group, and then performs decoding and feeds back a decoding result. After the third CB group is retransmitted, the first CB group is individually retransmitted. In addition, optionally, the NDI is used to indicate retransmission of the first CB group, and a retransmission indication method is the same as that for the third CB group. After receiving the retransmitted control information and data of the first CB group, the receiving device performs data processing, for example, performs HARQ combination with the previously received data of the first CB group, and then performs decoding and feeds back a decoding result.

Solution 8: Indication information for auxiliary reception is combined with a multi-bit feedback and a retransmission indication. After resource preemption occurs in a data sending process, the sending device may send indication information for auxiliary reception, which is, for example, N-bit, to indicate a number or a bitmap of a preempted CB group, or to indicate location information of a preempted time-frequency resource. The receiving device erases, according to the indication information for auxiliary reception, previous buffer data that is affected by puncturing. The erasing operation may be performed before channel decoding and a feedback, or may be performed after channel decoding and a feedback. Optionally, a quantity of bits that are fed back by the receiving device may be determined according to the indication information for auxiliary reception. If the indication information for auxiliary reception is received, a plurality of bits are fed back, in other words, four bits 1010 (indicating a NACK for the first and the third CB groups) are fed back, and otherwise, a 1-bit NACK is fed back optionally. Optionally, the quantity of bits that are fed back by the receiving device may be determined without using the indication information for auxiliary reception. For example, a multi-bit feedback may be performed according to a normal procedure. After receiving the feedback, the sending device may send control information by using the indication method for special retransmission in the embodiments and examples described above, or may indicate retransmission of the first CB group and the third CB group in a manner that is not limited to the manner in this example. In addition, optionally, the NDI is used to indicate retransmission of the first CB group and the third CB group. In this case, corresponding data in the first CB group may be retransmitted data, and data in the third CB group may be data in the complete third CB group, or may be data that is in the third CB group and that is corresponding to a location of a preempted resource. After receiving the retransmitted control information and data of the first CB group and the third CB group, the receiving device performs data processing, for example, performs HARQ combination with the previously received data of the first CB group and the third CB group, and then performs decoding and feeds back a decoding result.

For a processing process of retransmitting data of a CB that is affected by puncturing or retransmitting data on a time-frequency resource that is affected by puncturing, directly refer to the foregoing processing process of retransmitting the data of the CB group that is affected by puncturing. Details are not described herein again.

It may be understood that, unless otherwise specified or logically infeasible, some technical descriptions, technical assumptions, and technical terms in the foregoing various embodiments may be shared in various embodiments, and the technical solutions may also be combined.

In the foregoing embodiments provided in this application, the data transmission method provided in the embodiments of this application is described separately from perspectives of the sending device, the receiving device, and interaction between the sending device and the receiving device. It may be understood that to implement the foregoing functions, various devices such as the sending device and the receiving device include corresponding hardware structures and/or software modules for performing the functions. A person of ordinary skill in the art should easily be aware that, in combination with units and method steps in the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 10 and FIG. 11 are schematic structural diagrams of two possible communications apparatuses according to embodiments of this application. The communications apparatus implements functions of the sending device in the method embodiments described above, and therefore can also implement beneficial effects of the method embodiments. In the embodiments of this application, the communications apparatus may be the UE 130 or the UE 140 or the base station 120 shown in FIG. 1, or may be another device on a sending side that performs wireless communication.

As shown in FIG. 10, a communications apparatus 1000 includes a processing unit 1010 and a sending unit 1020.

The processing unit 1010 is configured to generate first control information, where the first control information is control information that is sent by the communications apparatus to a second device when the communications apparatus transmits at least one transport block TB for the first time, the first control information includes a modulation and coding scheme MCS field, and the MCS field includes at least one of information about a modulation scheme used when the TB is sent and information about a transport block size TBS.

The sending unit 1020 is configured to send the first control information to the second device.

The processing unit 1010 is further configured to generate second control information, where the second control information is control information that is sent by the communications apparatus to the second device when the communications apparatus retransmits the TB, the second control information includes a first field, the first field includes information about a relationship between retransmitted data and the TB, and the second control information does not include the MCS field.

The sending unit 1020 is further configured to send the second control information to the second device.

Optionally, a length of the first field is the same as a length of the MCS field. Optionally, a start location of the first field in the second control information is the same as a start location of the MCS field in the first control information.

As shown in FIG. 11, a communications apparatus 1100 includes a processor 1110, a transceiver 1120, and a memory 1130. The memory 1130 may be configured to store code for execution by the processor 1110. The components in the communications apparatus 1100 communicate with each other through an internal connection path, for example, transmit a control and/or data signal by using a bus.

The processor 1110 is configured to generate first control information, where the first control information is control information that is sent by the communications apparatus to a second device when the communications apparatus transmits at least one transport block TB for the first time, the first control information includes a modulation and coding scheme MCS field, and the MCS field includes at least one of information about a modulation scheme used when the TB is sent and information about a transport block size TBS.

The transceiver 1120 is configured to send the first control information to the second device.

The processor 1110 is further configured to generate second control information, where the second control information is control information that is sent by the communications apparatus to the second device when the communications apparatus retransmits the TB, the second control information includes a first field, the first field includes information about a relationship between retransmitted data and the TB, and the second control information does not include the MCS field.

The transceiver 1120 is further configured to send the second control information to the second device.

Optionally, a length of the first field is the same as a length of the MCS field. Optionally, a start location of the first field in the second control information is the same as a start location of the MCS field in the first control information.

For more detailed function descriptions of the processing unit 1010, the processor 1110, the sending unit 1020, and the transceiver 1120, directly refer to the foregoing method embodiments. Details are not described herein again.

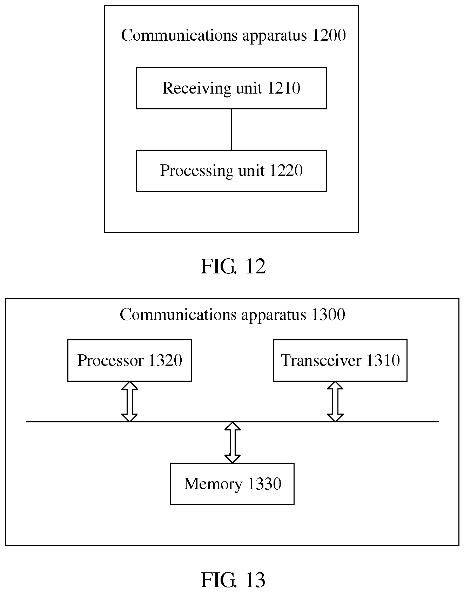

FIG. 12 and FIG. 13 are schematic structural diagrams of two other possible communications apparatuses according to embodiments of this application. The communications apparatus implements functions of the receiving device in the method embodiments described above, and therefore can also implement beneficial effects of the method embodiments. In the embodiments of this application, the communications apparatus may be the UE 130 or the UE 140 or the base station 120 shown in FIG. 1, or may be another device on a receiving side that performs wireless communication

As shown in FIG. 12, a communications apparatus 1200 includes a receiving unit 1210 and a processing unit 1220.

The receiving unit 1210 is configured to receive first control information, where the first control information is control information from a first device when the first device transmits at least one transport block TB to the communication device for the first time, the first control information includes a modulation and coding scheme MCS field, and the MCS field includes at least one of information about a modulation scheme used when the TB is sent and information about a transport block size TBS.

The processing unit 1220 is configured to parse the first control information.

The receiving unit 1210 is further configured to receive second control information, where the second control information is control information from the first device when the first device retransmits the TB to the communications apparatus, the second control information includes a first field, the first field includes information about a relationship between retransmitted data and the TB, and the second control information does not include the MCS field.

The processing unit 1220 is further configured to parse the second control information.

Optionally, a length of the first field is the same as a length of the MCS field. Optionally, a start location of the first field in the second control information is the same as a start location of the MCS field in the first control information.

As shown in FIG. 13, a communications apparatus 1300 includes a processor 1320, a transceiver 1310, and a memory 1330. The memory 1330 may be configured to store code for execution by the processor 1320. The components in the communications apparatus 1300 communicate with each other through an internal connection path, for example, transmit a control and/or data signal by using a bus.

The transceiver 1310 is configured to receive first control information, where the first control information is control information from a first device when the first device transmits at least one transport block TB to the communications apparatus for the first time, the first control information includes a modulation and coding scheme MCS field, and the MCS field includes at least one of information about a modulation scheme used when the TB is sent and information about a transport block size TBS.

The processor 1320 is configured to parse the first control information.

The transceiver 1310 is further configured to receive second control information, where the second control information is control information from the first device when the first device retransmits the TB to the communications apparatus, the second control information includes a first field, the first field includes information about a relationship between retransmitted data and the TB, and the second control information does not include the MCS field.

The processor 1320 is further configured to parse the second control information.

Optionally, a length of the first field is the same as a length of the MCS field. Optionally, a start location of the first field in the second control information is the same as a start location of the MCS field in the first control information.

It may be understood that FIG. 11 and FIG. 13 each merely show a design of the communications apparatus. In actual application, the communications apparatus may include any quantity of receivers and processors, and all communications apparatuses that can implement the embodiments of this application shall fall within the protection scope of this application.

For more detailed function descriptions of the receiving unit 1210, the transceiver 1310, the processing unit 1220, and the processor 1320, directly refer to the foregoing method embodiments. Details are not described herein again.

The apparatus embodiments shown in FIG. 10 to FIG. 13 are obtained by referring to the method embodiment in Embodiment 1. It may be understood that another apparatus embodiment of this application may be directly obtained by referring to another method embodiment of this application, and details are not described herein again.

It may be understood that the processor in the embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field-Programmable Gate Array, FPGA) or another programmable logic device, a transistor logic device, a hardware component, or a combination thereof. The general-purpose processor may be a microprocessor, or may be any regular processor.

The method steps in the embodiments of this application may be implemented by hardware or may be implemented by the processor executing a software instruction. The software instruction may include a corresponding software module. The software module may be stored in a random access memory (Random Access Memory, RAM), a flash memory, a read-only memory (Read-Only Memory, ROM), a programmable read only memory (Programmable ROM, PROM), an erasable programmable read-only memory (Erasable PROM, EPROM), an electrically erasable programmable read only memory (Electrically EPROM, EEPROM), a register, a hard disk, a removable hard disk, a CD-ROM, or any other form of storage medium well-known in the art. For example, the storage medium is coupled to the processor, so that the processor can read information from the storage medium or write information into the storage medium. Certainly, the storage medium may be a component of the processor. The processor and the storage medium may be located in the ASIC. In addition, the ASIC may be located in a sending device or a receiving device. Certainly, the processor and the storage medium may exist in a sending device or a receiving device as discrete components.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instruction may be stored in a computer readable storage medium, or may be transmitted through the computer readable storage medium. The computer instructions may be transmitted from a website, a computer, a server, or a data center to another website, computer, server, or data center in a wired (for example, through a coaxial cable, an optical fiber, or a digital subscriber line (DSL)) or wireless (for example, through infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It may be understood that, various numerals used in the embodiments of this application are merely used for distinguishing for ease of description, but are not intended to limit the scope of the embodiments of this application.

It may be understood that the sequence numbers of the foregoing processes do not mean execution sequences in the embodiments of this application, and should not be construed as any limitation on the implementation processes of the embodiments of this application. The execution sequences of the processes should be determined according to functions and internal logic of the processes.

The foregoing descriptions are merely specific implementations of the embodiment of this application. The scope of protection is defined by the appended claims.

## Claims

1. A data transmission method, wherein the method comprises:
when a first device transmits at least one transport block, TB, for the first time, sending (S210), by the first device, first control information to a second device, wherein the first control information comprises a modulation and coding scheme, MCS, field, and the MCS field comprises information about a modulation scheme used when the TB is sent and information about a transport block size, TBS; and
when the first device retransmits the TB, sending (S220), by the first device, second control information to the second device, wherein the second control information comprises a first field but does not comprise the MCS field and the information about the TBS, and
wherein a length of the first field is the same as a length of the MCS field and a start location of the first field in the second control information is the same as a start location of the MCS field in the first control information,
wherein a length of the second control information is less than or equal to a length of the first control information,
wherein a modulation order and a code block group, CBG, index are jointly encoded in the first field,
wherein the CBG index indicates a relationship between retransmitted data and the TB, and
wherein the relationship between the retransmitted data and the TB comprises:
the retransmitted data is at least one code block, CB, group in the TB, and the CB group comprises at least one CB.

2. The method according to claim 1, wherein the first field is a reused MCS field, and
wherein a most significant bit, MSB, of the reused MCS field is to distinguish between a normal retransmission and a special retransmission,
wherein in the normal retransmission data in all CBs in the TB are retransmitted by using identical or different rate matching parameters, and
wherein in the special transmission, only data in CBs or CB groups in the TB that encounter a decoding error or are affected by puncturing is retransmitted.

3. The method according to claim 1, wherein if a quantity of the at least one CB is greater than a predetermined threshold value, the retransmission of the TB is as a special transmission,
wherein in the special transmission, only data in CBs or CB groups in the TB that are affected by puncturing is retransmitted.

4. A data transmission method, wherein the method comprises:
when a second device receives data transmitted for the first time in at least one transport block, TB, from a first device, receiving, by the second device, first control information from the first device;
parsing the first control information, wherein the first control information comprises a modulation and coding scheme, MCS, field, and the MCS field comprises information about a modulation scheme used when the TB is sent and information about a transport block size, TBS;
when the second device receives retransmitted data in the TB from the first device, receiving, by the second device, second control information from the first device; and
parsing the second control information, wherein the second control information comprises a first field but does not comprise the MCS field and the information about the TBS, and
wherein a length of the first field is the same as a length of the MCS field and a start location of the first field in the second control information is the same as a start location of the MCS field in the first control information,
wherein a length of the second control information is less than or equal to a length of the first control information,
wherein a modulation order and a code block group, CBG, index are jointly encoded in the first field,
wherein the CBG index indicates a relationship between retransmitted data and the TB, and
wherein the relationship between the retransmitted data and the TB comprises:
the retransmitted data is at least one code block, CB, group in the TB, and the CB group comprises at least one CB.

5. The method according to claim 4, wherein the first field is a reused MCS field, and
wherein a most significant bit, MSB, of the reused MCS field is to distinguish between a normal retransmission and a special retransmission,
wherein in the normal retransmission data in all CBs in the TB are retransmitted by using identical or different rate matching parameters, and
wherein in the special transmission, only data in CBs or CB groups in the TB that encounter a decoding error or are affected by puncturing is retransmitted.

6. The method according to claim 4, wherein if a quantity of the at least one CB is greater than a predetermined threshold value, the retransmission of the TB is as a special transmission,
wherein in the special transmission, only data in CBs or CB groups in the TB that are affected by puncturing is retransmitted.

7. A communications apparatus (1000, 1100, 1200, 1300), wherein the apparatus comprises means adapted to perform the method according to any one of claims 1 to 3.

8. A communications apparatus (1000, 1100, 1200, 1300), wherein the apparatus comprises means adapted to perform the method according to any one of claims 4 to 6.

9. A computer program comprising instructions, wherein when executed by a communications apparatus (1000, 1100, 1200, 1300), the instructions cause the communications apparatus to perform the method according to any one of claims 1 to 3 or any one of claims 4 to 6.

## Patentansprüche

1. Datenübertragungsverfahren, wobei das Verfahren Folgendes umfasst:
wenn eine erste Vorrichtung zum ersten Mal mindestens einen Transportblock, TB, überträgt, Senden (S210), durch die erste Vorrichtung, erster Steuerinformationen an eine zweite Vorrichtung, wobei die ersten Steuerinformationen ein Modulations- und Codierungsschema(MSC)-Feld umfassen und das MCS-Feld Informationen über ein Modulationsschema, das beim Senden des TB verwendet wird, und Informationen über eine Transportblockgröße, TBS, umfasst; und
wenn die erste Vorrichtung den TB erneut überträgt, Senden (S220), durch die erste Vorrichtung, zweiter Steuerinformationen an die zweite Vorrichtung, wobei die zweiten Steuerinformationen ein erstes Feld umfassen, aber nicht das MCS-Feld und die Informationen über die TBS umfassen, und
wobei eine Länge des ersten Felds gleich einer Länge des MCS-Felds ist und eine Startposition des ersten Felds in den zweiten Steuerinformationen gleich einer Startposition des MCS-Felds in den ersten Steuerinformationen ist,
wobei eine Länge der zweiten Steuerinformationen kleiner oder gleich einer Länge der ersten Steuerinformationen ist,
wobei in dem ersten Feld eine Modulationsreihenfolge und ein Codeblockgruppen(CBG)-Index gemeinsam codiert sind,
wobei der CBG-Index eine Beziehung zwischen erneut übertragenen Daten und dem TB anzeigt, und
wobei die Beziehung zwischen den erneut übertragenen Daten und dem TB Folgendes umfasst:
die erneut übertragenen Daten sind mindestens eine Codeblock(CB)-Gruppe in dem TB und die CB-Gruppe umfasst mindestens einen CB.

2. Verfahren nach Anspruch 1, wobei das erste Feld ein wiederverwendetes MCS-Feld ist, und
wobei ein höchstwertiges Bit, MSB, des wiederverwendeten MCS-Felds dazu dient, zwischen einer normalen erneuten Übertragung und einer speziellen erneuten Übertragung zu unterscheiden, wobei bei der normalen erneuten Übertragung Daten in allen CB in dem TB unter Verwendung identischer oder unterschiedlicher Ratenanpassungsparameter erneut übertragen werden, und
wobei bei der speziellen Übertragung nur Daten in CB oder CB-Gruppen in dem TB erneut übertragen werden, die einem Decodierfehler ausgesetzt sind oder von Punktierung betroffen sind.

3. Verfahren nach Anspruch 1, wobei, falls eine Menge des mindestens einen CB größer als ein vorbestimmter Schwellenwert ist, die erneute Übertragung des TB als spezielle Übertragung erfolgt,
wobei bei der speziellen Übertragung nur Daten in CB oder CB-Gruppen in dem TB erneut übertragen werden, die von Punktierung betroffen sind.

4. Datenübertragungsverfahren, wobei das Verfahren Folgendes umfasst:
wenn eine zweite Vorrichtung Daten empfängt, die zum ersten Mal in mindestens einem Transportblock, TB, von einer ersten Vorrichtung übertragen werden, Empfangen, durch die zweite Vorrichtung, erster Steuerinformationen von der ersten Vorrichtung;
Parsen der ersten Steuerinformationen, wobei die ersten Steuerinformationen ein Modulations- und Codierungsschema(MSC)-Feld umfassen und das MCS-Feld Informationen über ein Modulationsschema, das beim Senden des TB verwendet wird, und Informationen über eine Transportblockgröße, TBS, umfasst;
wenn die zweite Vorrichtung erneut übertragene Daten in dem TB von der ersten Vorrrichtung empfängt, Empfangen, durch die zweite Vorrichtung, zweiter Steuerinformationen von der ersten Vorrichtung; und
Parsen der zweiten Steuerinformationen, wobei die zweiten Steuerinformationen ein erstes Feld umfassen, aber nicht das MCS-Feld und die Informationen über die TBS umfassen, und
wobei eine Länge des ersten Felds gleich einer Länge des MCS-Felds ist und eine Startposition des ersten Felds in den zweiten Steuerinformationen gleich einer Startposition des MCS-Felds in den ersten Steuerinformationen ist,
wobei eine Länge der zweiten Steuerinformationen kleiner oder gleich einer Länge der ersten Steuerinformationen ist,
wobei in dem ersten Feld eine Modulationsreihenfolge und ein Codeblockgruppen(CBG)-Index gemeinsam codiert sind,
wobei der CBG-Index eine Beziehung zwischen erneut übertragenen Daten und dem TB anzeigt, und
wobei die Beziehung zwischen den erneut übertragenen Daten und dem TB Folgendes umfasst:
die erneut übertragenen Daten sind mindestens eine Codeblock(CB)-Gruppe in dem TB und die CB-Gruppe umfasst mindestens einen CB.

5. Verfahren nach Anspruch 4, wobei das erste Feld ein wiederverwendetes MCS-Feld ist, und
wobei ein höchstwertiges Bit, MSB, des wiederverwendeten MCS-Felds dazu dient, zwischen einer normalen erneuten Übertragung und einer speziellen erneuten Übertragung zu unterscheiden, wobei bei der normalen erneuten Übertragung Daten in allen CB in dem TB unter Verwendung identischer oder unterschiedlicher Ratenanpassungsparameter erneut übertragen werden, und
wobei bei der speziellen Übertragung nur Daten in CB oder CB-Gruppen in dem TB erneut übertragen werden, die einem Decodierfehler ausgesetzt sind oder von Punktierung betroffen sind.

6. Verfahren nach Anspruch 4, wobei, falls eine Menge des mindestens einen CB größer als ein vorbestimmter Schwellenwert ist, die erneute Übertragung des TB als spezielle Übertragung erfolgt,
wobei bei der speziellen Übertragung nur Daten in CB oder CB-Gruppen in dem TB erneut übertragen werden, die von Punktierung betroffen sind.

7. Kommunikationseinrichtung (1000, 1100, 1200, 1300), wobei die Einrichtung Mittel umfasst, die dazu ausgelegt sind, das Verfahren nach einem der Ansprüche 1 bis 3 durchzuführen.

8. Kommunikationseinrichtung (1000, 1100, 1200, 1300), wobei die Einrichtung Mittel umfasst, die dazu ausgelegt sind, das Verfahren nach einem der Ansprüche 4 bis 6 durchzuführen.

9. Computerprogramm, umfassend Anweisungen, wobei die Anweisungen bei Ausführung durch eine Kommunikationseinrichtung (1000, 1100, 1200, 1300) bewirken, dass die Kommunikationseinrichtung das Verfahren nach einem der Ansprüche 1 bis 3 oder einem der Ansprüche 4 bis 6 durchführt.

## Revendications

1. Procédé de transmission de données, dans lequel le procédé comprend :
lorsqu'un premier dispositif transmet au moins un bloc de transport, TB, pour la première fois, l'envoi (S210), par le premier dispositif, de premières informations de contrôle à un second dispositif, dans lequel les premières informations de contrôle comprennent un champ de schéma de modulation et de codage, MCS, et le champ MCS comprend des informations concernant un schéma de modulation utilisé lorsque le TB est envoyé et des informations concernant une taille de bloc de transport, TBS ; et
lorsque le premier dispositif retransmet le TB, l'envoi (S220), par le premier dispositif, de secondes informations de contrôle au second dispositif, dans lequel les secondes informations de contrôle comprennent un premier champ mais ne comprennent pas le champ MCS et les informations concernant la TBS, et
dans lequel une longueur du premier champ est la même que la longueur du champ MCS et un emplacement de début du premier champ dans les secondes informations de contrôle est la même que l'emplacement de début du champ MCS dans les premières informations de contrôle,
dans lequel une longueur des secondes informations de contrôle est inférieure ou égale à une longueur des premières informations de contrôle,
dans lequel un ordre de modulation et un indice de groupe de blocs de code, CBG, sont codés conjointement dans le premier champ,
dans lequel l'indice CBG indique une relation entre les données retransmises et le TB, et
dans lequel la relation entre les données retransmises et le TB comprend :
les données retransmises sont au moins un groupe de blocs de code, CB, dans le TB, et le groupe CB comprend au moins un CB.

2. Procédé selon la revendication 1, dans lequel le premier champ est un champ MCS réutilisé, et
dans lequel un bit de poids fort, MSB, du champ MCS réutilisé est destiné à distinguer entre une retransmission normale et une retransmission spéciale,
dans lequel les données de retransmission normale dans tous les CB du TB sont retransmises en utilisant des paramètres d'adaptation de débit identiques ou différents, et
dans lequel, dans la transmission spéciale, seules les données dans des CB ou des groupes CB dans le TB qui rencontrent une erreur de décodage ou qui sont affectées par la perforation sont retransmises.

3. Procédé selon la revendication 1, dans lequel si une quantité de l'au moins un CB est supérieure à une valeur seuil prédéterminée, la retransmission du TB est une transmission spéciale,
dans lequel, dans la transmission spéciale, seules les données dans des CB ou des groupes CB dans le TB qui sont affectées par la perforation sont retransmises.

4. Procédé de transmission de données, dans lequel le procédé comprend :
lorsqu'un second dispositif reçoit des données transmises pour la première fois dans au moins un bloc de transport, TB, en provenance d'un premier dispositif, la réception, par le second dispositif, de premières informations de contrôle en provenance du premier dispositif ;
l'analyse des premières informations de contrôle, dans lequel les premières informations de contrôle comprennent un champ de schéma de modulation et de codage, MCS, et le champ MCS comprend des informations concernant un schéma de modulation utilisé lorsque le TB est envoyé et des informations concernant une taille de bloc de transport, TBS ;
lorsque le second dispositif reçoit des données retransmises dans le TB en provenance du premier dispositif, la réception, par le second dispositif, des secondes informations de contrôle en provenance du premier dispositif ; et
l'analyse des secondes informations de contrôle, dans lequel les secondes informations de contrôle comprennent un premier champ mais ne comprennent pas le champ MCS et les informations concernant la TBS, et
dans lequel une longueur du premier champ est la même que la longueur du champ MCS et un emplacement de début du premier champ dans les secondes informations de contrôle est la même que l'emplacement de début du champ MCS dans les premières informations de contrôle,
dans lequel une longueur des secondes informations de contrôle est inférieure ou égale à une longueur des premières informations de contrôle,
dans lequel un ordre de modulation et un indice de groupe de blocs de code, CBG, sont codés conjointement dans le premier champ,
dans lequel l'indice CBG indique une relation entre les données retransmises et le TB, et
dans lequel la relation entre les données retransmises et le TB comprend :
les données retransmises sont au moins un groupe de blocs de code, CB, dans le TB, et le groupe CB comprend au moins un CB.

5. Procédé selon la revendication 4, dans lequel le premier champ est un champ MCS réutilisé, et
dans lequel un bit de poids fort, MSB, du champ MCS réutilisé est destiné à distinguer entre une retransmission normale et une retransmission spéciale,
dans lequel les données de retransmission normale dans tous les CB du TB sont retransmises en utilisant des paramètres d'adaptation de débit identiques ou différents, et
dans lequel, dans la transmission spéciale, seules les données dans des CB ou des groupes CB dans le TB qui rencontrent une erreur de décodage ou qui sont affectées par la perforation sont retransmises.

6. Procédé selon la revendication 4, dans lequel si une quantité de l'au moins un CB est supérieure à une valeur seuil prédéterminée, la retransmission du TB est une transmission spéciale,
dans lequel, dans la transmission spéciale, seules les données dans des CB ou des groupes CB dans le TB qui sont affectées par la perforation sont retransmises.

7. Appareil de communication (1000, 1100, 1200, 1300), dans lequel l'appareil comprend des moyens adaptés pour réaliser le procédé selon l'une quelconque des revendications 1 à 3.

8. Appareil de communication (1000, 1100, 1200, 1300), dans lequel l'appareil comprend des moyens adaptés pour réaliser le procédé selon l'une quelconque des revendications 4 à 6.

9. Programme informatique comprenant des instructions, dans lequel lorsqu'elles sont exécutées par un appareil de communication (1000, 1100, 1200, 1300), les instructions amènent l'appareil de communication à réaliser le procédé selon l'une quelconque des revendications 1 à 3 ou l'une quelconque des revendications 4 à 6.
